# EUROPEAN PATENT SPECIFICATION

(11) **EP 2 124 458 B1**
(45) Date of publication and mention of the grant of the patent: **10.12.2014**
(21) Application number: 08703012.8
(22) Date of filing: 09.01.2008
(51) Int. Cl.: H04N 13/00

(54) **IMAGE FILE PROCESSING DEVICE, IMAGE FILE REPRODUCTION DEVICE, AND IMAGE FILE EDITION DEVICE**
BILDDATEIVERARBEITUNGSEINRICHTUNG, BILDDATEIWIEDERGABEEINRICHTUNG UND BILDDATEIEDITIEREINRICHTUNG
DISPOSITIF DE TRAITEMENT DE FICHIER D'IMAGE, DISPOSITIF DE REPRODUCTION DE FICHIER D'IMAGE, ET DISPOSITIF D'ÉDITION DE FICHIER D'IMAGE

(30) Priority: 15.01.2007 JP 2007006449
(43) Date of publication of application: 25.11.2009
(73) Proprietor: Olympus Imaging Corp., Tokyo 151-0072 (JP)
(72) Inventor: YOSHIDA, Hideaki, Tokyo 151-0072 (JP)
(74) Representative: von Hellfeld, Axel
(86) International application number: PCT/JP2008/050141
(87) International publication number: WO 2008/087881

(56) References cited:
- EP-A1- 1 501 317
- EP-A1- 1 742 488
- JP-A- 2003 259 268
- JP-A- 2004 240 749
- JP-A- 2004 282 677
- JP-A- 2005 311 983
- JP-A- 2005 311 985
- JP-A- 2006 195 807
- US-B1- 6 842 540

## Description

### Technical Field

This invention relates to an image file processing apparatus, an image file reproduction apparatus and an image file working/editing apparatus, and in particular to an image file processing apparatus, an image file reproduction apparatus and an image file working/editing apparatus which are preferable for photographing, image processing, image production, image working/editing and the like of a stereo image.

### Background Art

As an apparatus and method for photographing and recording an image including information about stereoscopic vision, and reproducing and viewing the image, various apparatuses and methods have been conventionally proposed and put to practical use.

Among these, a stereoscopic image (stereo image) photographing and viewing method in a so-called twin-lens stereo system is commonly and widely used, in which two images obtained by photographing the same subject with a predetermined parallax between the images (in a usual case, an average value of human interpupillary distance between both eyes, which is an interval of about 6 cm) intended to accommodate the points of view of both of right and left eyes are presented to both of the right and left eyes, respectively, to enable stereoscopic vision, because the method has a significant stereoscopic vision effect while the apparatus configuration is the simplest and can be realized inexpensively.

Such a photographing and viewing method by the twin-lens stereo system is limited in that only one person can view one stereo image at the same time, and it is the most basic and classic method. However, the photographing and viewing method by the twin-lens stereo system, that is, a system using a pair of images (stereo pair images) photographed with a parallax between the images is one of the most prevailing systems today, as a system enabling a clear stereo image to be viewed very inexpensively.

As an apparatus for photographing a pair of images (stereo pair images) with a predetermined parallax, there is a camera, that is, a stereo image photographing apparatus or the like, in the form of being equipped with a so-called stereo adaptor or the like which is configured to divide a luminous flux from a subject on the optical axis of a photographing optical system of an ordinary camera (photographing apparatus) and cause a pair of images (stereo pair images) with a predetermined parallax to be formed on a single light-receiving plane.

As a conventional stereo image photographing apparatus configured with the use of the stereo adaptor or the like, various apparatuses have been disclosed, for example, by Japanese Patent Application Laid-Open Publication No. 2002-218506 and the like.

The stereo image photographing apparatus disclosed by the above-mentioned Japanese Patent Application Laid-Open Publication No. 2002-218506 and the like is provided with a system controller having a stereo adaptor detection section which detects that a stereo adaptor has been mounted, an automatic exposure (AE) control section for analyzing a subject image signal about a photometry area and calculating photometry information required for exposure control, a photometry area setting section which sets a photometry area on an image, and the like. The photometry area setting section is configured to have a function of setting a photometry area in an ordinary photographing mode different from the area in a stereo photographing mode.

The stereo image photographing apparatus is adapted so that a photometry operation optimal for a set photographing mode is executed only by a user switching the photographing mode setting between the ordinary photographing mode and the stereo photographing mode prior to a photographing operation, that is, so that a photometry area optimal for the photographing mode selected from between the ordinary photographing mode and the stereo photographing mode is automatically set. Thereby, appropriate automatic exposure control in accordance with the photographing mode set by the user is executed.

In general, the stereo image photographing apparatus based on the twin-lens stereo system is configured to generate one image (referred to as an integrated image) in which two images with the same subject as a target, which have taken with a parallax between the images (each image is referred to as a monocular image), are arranged right and left within the range of an image frame corresponding to one image obtained by an ordinary photographing action.

By using a predetermined stereo image reproduction apparatus, the integrated image can be viewed as a stereo image having a stereoscopic effect. The stereo image reproduction apparatus is configured so that, in order to obtain a stereoscopic effect from one integrated image configured by arranging monocular images right and left, the monocular image arranged on the left side of the integrate image can be viewed only by a left eye and the monocular image arranged on the right side can be viewed only by a right eye.

Thereby, the integrated image constituted by the two monocular images viewed by both of right and left eyes are merged as one image in an viewer's brain, and thereby, the integrated image is recognized by the viewer as an image having a stereoscopic effect. In this case, the image recognized in the viewer's brain (hereinafter referred to as a merged image) causes perspective to occur according to the amount of displacement of each of the monocular images arranged right and left of the integrated image.

In the meantime, in recent years, there has been widely and commonly spread a photographing apparatus, such as an electronic camera, which is provided with a photoelectric conversion device, such as an image pickup device, for performing photoelectric conversion processing of an optical image formed by a photographing optical system and which is configured to record an optical image of a desired subject as an electrical image signal.

As a standard of image data (digital image data) handled in such a conventional photographing apparatus, for example, image data in an Exif (Exchangeable Image File Format) standard data format is widely spread.

As for a compressed image file, the Exif standard is specified in accordance with a JPEG (Joint Photographic Experts Group) standard file format.

That is, in the Exif standard, in the case of a compressed image file, the file is configured in the form that image data itself is handled as JPEG-standard image data and metadata (metadata: data describing information about image data) or the like about the image data is arranged in its file header part.

In the Exif-standard metadata, various information about image data, for example, photographing date and time information and the like, or the data of a reduced image (thumbnail) formed in the TIFF (Tagged Image File Format) format and the like are recorded.

In the metadata of the Exif-standard image file, information about a stereo image and the like can be also described. That is, a dedicated tag for describing information about a stereo image and the like can be additionally defined by revising the Exif standard. It is also possible to make a definition in arbitrarily usable data, for example, MakerNote or the like, without such an additional definition. Here, as the information about a stereo image (hereinafter referred to as stereoscopic image information), there can be various information including identification information showing that the file is a stereo image. For example, there is optimum trimming position information.

In general, in an integrated image constituted by a pair of monocular images photographed with the use of the stereo adaptor described above or the like, eclipse may exist on a boundary part between the two right and left monocular images or displacement of the image forming positions of the right and left monocular images may exist.

Accordingly, there may be performed processing for correcting such eclipse, position displacement, and the like, for example, processing for setting an image area optimal for stereoscopic vision (referred to as an image frame) in the image area of each monocular image.

As an example of concrete processing, there are given working processing, editing processing and the like, for example, trimming (cutting out) predetermined areas which are to be optimal for stereoscopic vision and which correspond to each other, in image areas of the right and left monocular images, from the monocular images, respectively.

The image area (image frame) in each monocular image set in this case significantly influences depth feeling in the result of viewing of a stereo image. Therefore, when working/editing processing is performed for the image data of a stereo image file, it is necessary that setting of an image area (image frame) in each monocular image, for which trimming should be performed, that is, setting of an optimum trimming position is appropriately performed.

Therefore, information about the optimum trimming position (optimum trimming position information) for correction processing for eclipse, position displacement and the like is recorded in the metadata of a stereo image file. When the stereo image file which includes the metadata is reproduced as a stereo image by a reproduction apparatus, a merged image obtained when an viewer views the stereo image based on the image file has an appropriate depth feeling as a stereo image by performing an image reproduction operation on the basis of the optimum trimming position information.

The working processing and editing processing of a stereo image file as described above are to be performed with the use of a working/editing apparatus provided with dedicated image working/editing software compatible with a stereo image (hereinafter referred to as a stereo-compliant software), that is, a stereo-image-compliant image file working/editing apparatus.

If working/editing processing of a stereo image file is performed with the use of the stereo-image-compliant image file working/editing apparatus, stereoscopic image information and the like are to be described in the metadata of the image file, as described above.

Meanwhile, as described above, it is common that a file in conformity with the Exif standard is used for the stereo image file itself. The image data itself included in the image file is similar to ordinary still image data which can be handled by an ordinary photographing apparatus which is in conformity with the Exif standard.

Therefore, for the image data in an image file including metadata in which stereoscopic image information and the like are described, as described above, similar data working/editing processing and the like can be performed whether by using the stereo-image-compliant image file working/editing apparatus as described above or by using a common image file working/editing apparatus which is not compatible with a stereo image (a non-stereo-image-compliant image file working/editing apparatus).

Therefore, if working/editing processing is performed for image data of an image file which has stereoscopic image information and the like in metadata, with the use of a common non-stereo-image-compliant image file working/editing apparatus, working/editing modification processing is performed only for the image data without the metadata part being destroyed.

However, in the non-stereo-image-compliant image file working/editing apparatus, it is not possible to perform editing for various items in stereoscopic image information in metadata or perform update of the stereoscopic image information according to working/editing processing, and the like.

Therefore, if working/editing processing is performed for image data of an image file having metadata which includes stereoscopic image information, with the use of a non-stereo-image-compliant image file working/editing apparatus, the stereoscopic image information in the metadata of the image file is not updated according to working/editing though the working/editing processing of the image data is performed, and therefore, the original stereoscopic image information in the metadata is kept as it is.

In the image file in such a state, disagreement occurs between the state of the actual image data (an integrated image) and the contents of information about the stereoscopic image information in the metadata. This may cause fatigue of eyes at the time of reproduction and viewing of a stereo image. When the degree of the disagreement is large, there is a possibility that the right and left images cannot be visually merged into one stereo image and viewing is impossible.

Accordingly, in view of this situation, there is disclosed a proposal of a stereo-image-compliant image file working/editing apparatus in which, for example, size information about an original image is recorded in metadata as one item of information included in stereoscopic image information included in the metadata, by Japanese Patent Application Laid-Open Publication No. 2005-311985 and the like.

The apparatus disclosed by Japanese Patent Application Laid-Open Publication No. 2005-311985 is provided with stereo image data generation means for generating stereo image data; metadata generation means for generating metadata about the stereo image data; and stereo image size information generation means for generating information about the image size of the stereo image data; wherein the information about the image size generated by the stereo image size information generation means is added to the metadata, and the metadata and the stereo image data generated by the stereo image data generation means are synthesized to generate an image file.

In this case, as for such an image file that size information about an original image included in the metadata of the image file is kept even after working/editing processing, its image data is judged to be unworked. On the other hand, in the case where disagreement between pieces of information about the image size is confirmed, continuation of a reproduction operation by reproduction means is prohibited by control means.

However, if working processing such as expansion processing is performed for the image data of a stereo image file, with the use of the stereo-image-compliant apparatus disclosed by Japanese Patent Application Laid-Open Publication No. 2005-311985, the information about the image size agrees with the original image size unless the final image size is changed. In this case, it is not possible to certainly judge whether the image data of the image file is unworked data or not.

That is, even when working/editing processing is performed by the apparatus, the image sizes of the image file may agree with each other. However, since the image data of the image file, actually, has been working/editing-processed, there is a problem that there is a possibility that "disagreement between the state of the actual image data and the contents of information about the stereoscopic image information in the metadata" described above still exists in the image based on the image data.

EP 1 501 317 A1 discloses an image data creation device. A multimedia information file includes a header control information, three-dimensional display control information and three-dimensional image data. Three-dimensional display control information generation unit receives necessary parameters that are externally provided and generates three-dimensional display control information as one object. File generation unit receives the three-dimensional display control information and three-dimensional image data and adds header control information thereto to generate and output the multimedia information file.

EP 1 742 488 A1 discloses an image processing device comprising a system controller. The system controller includes a metadata generating section, a stereo image generating section-and an image file generating section. The metadata generating section generates a variety of collateral data related to a picked up image for delivery to an image file generating section. The image file generating section comprises a compressing section, to which image data on the stereo image is input. Metadata is also supplied to the data synthesizing section which synthesizes image data and metadata. The image file generating section further comprises a metadata date and time setting section and an image file date and time setting section. The metadata date and time setting section is configured to have capability of outputting information of created date and time on metadata related to various stereo image information to the data synthesizing section. The image file date and time setting section outputs information on created date and time of the image file to the data synthesizing section.

US6842540 B1 discloses an image processor where a supplement information such as date, time and surveillance camera number is generated and combined with surveillance image data in order to enhance evidence capability of the images wherein after generating of the bit map representation of the supplementary information and dividing it into 8x8 pixel blocks DCT coefficients are calculated and combined with the DCT coefficients block of the image data obtained during the JPEG encoding of the image data.

The present invention has been made in view of the point described above, and its object is to provide an image file processing apparatus, an image file reproduction apparatus and an image file working/editing apparatus as set out in the claims which are stereo-image-compliant apparatuses for handling an image file having stereoscopic image information in metadata and which are capable of securely and easily judging whether or not an image file having information about a stereo image (stereoscopic image information) in metadata has been working/editing-processed by a non-stereo-image-compliant apparatus.

### Disclosure of Invention

### Means for Solving the Problem

In order to achieve the above object, an image file processing apparatus according to the present invention is an image file processing apparatus which handles stereo image data indicating multiple monocular images obtained with a predetermined parallax between the images for a same subject, the image file processing apparatus includes: stereo image data generation means for generating the stereo image data indicating the multiple monocular images obtained with the predetermined parallax between the images for the same subject; metadata generation means for generating metadata about the stereo image data; image characteristic information generation means for generating image characteristic information showing characteristics of an image indicated on the basis of the stereo image data; and image file generation means for synthesizing the stereo image data generated by the stereo image data generation means and the metadata generated by the metadata generation means to generate an image file; wherein the image file generation means adds the image characteristic information generated by the image characteristic information generation means to the metadata generated by the metadata generation means.

An image file reproduction apparatus according to the present invention is an image file reproduction apparatus which handles stereo image data indicating multiple monocular images obtained with a predetermined parallax between the images for a same subject, the image file preproduction apparatus includes: reproduction means for reproducing and displaying a stereo image on the basis of a stereo image file configured by synthesizing the stereo image data and metadata which includes image characteristic information showing characteristics of an image indicated by the stereo image data; and judgment means for performing comparison judgment between image characteristic information extracted from image data of a stereo image file inputted to the image file reproduction apparatus and image characteristic information included in the metadata of the stereo image file inputted to the image file reproduction apparatus.

An image file working/editing apparatus according to the present invention is an image working/editing apparatus which handles stereo image data indicating multiple monocular images obtained with a predetermined parallax between the images for a same subject, the image file working/editing apparatus includes: image working/editing means for performing image working/editing processing for a stereo image file configured by synthesizing the stereo image data and metadata which includes image characteristic information showing characteristics of an image indicated by the stereo image data as a target; and image file generation means for synthesizing the stereo image data which has been image-working/editing-processed by the image working/editing means and the metadata to generate a stereo image file; wherein the image file generation means has image characteristic information update means for updating the image characteristic information in accordance with the contents of the working/editing processing performed by the image working/editing means, and adds the image characteristic information updated by the image characteristic information update means to the metadata to generate an image file.

According to the present invention as described above, it is possible to provide an image file processing apparatus, an image file reproduction apparatus and an image file working/editing apparatus which are stereo-image-compliant apparatuses for handling an image file having stereoscopic image information in metadata and which are capable of securely and easily judging whether or not an image file having information about a stereo image (stereoscopic image information) in metadata has been working/editing-processed by a non-stereo-image-compliant apparatus.

### Brief Description of the Drawings

Fig. 1 is a block configuration diagram schematically showing internal configuration of an electronic camera configured to be provided with an image file processing apparatus of a first embodiment of the present invention;
Fig. 2 is a block configuration diagram showing concrete configuration of an image file generation section of a system controller as the image file processing apparatus in Fig. 1;
Fig. 3 is a conceptual diagram showing an example of internal configuration of an image file generated by the image file generation section in Fig. 2;
Fig. 4 is a flowchart showing the flow of an operation of the image file generation section in Fig. 2;
Fig. 5 is a block configuration diagram schematically showing configuration of an image file reproduction/display apparatus of a second embodiment of the present invention;
Fig. 6 is a flowchart showing the flow of an image reproduction/display action performed in the image file reproduction/display apparatus in Fig. 5;
Fig. 7 is a block configuration diagram schematically showing configuration of an image file working/editing apparatus of a third embodiment of the present invention; and
Fig. 8 is a flowchart showing the flow of an image file generation action performed in the image file working/editing apparatus in Fig. 7.

### Best Mode for Carrying Out the Invention

The present invention will be described below by embodiments shown in figures.

### (First embodiment)

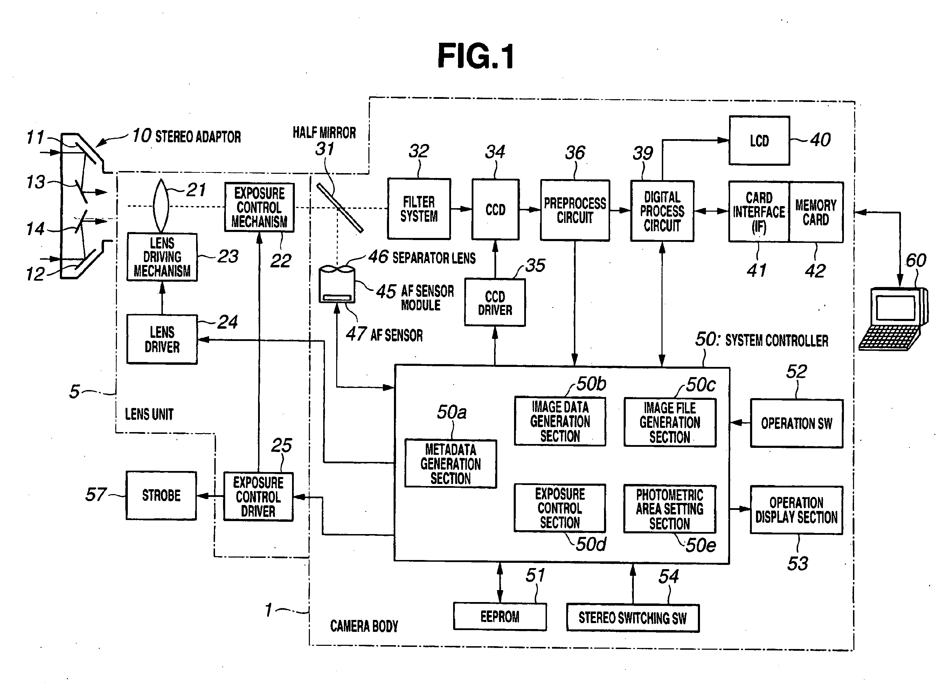

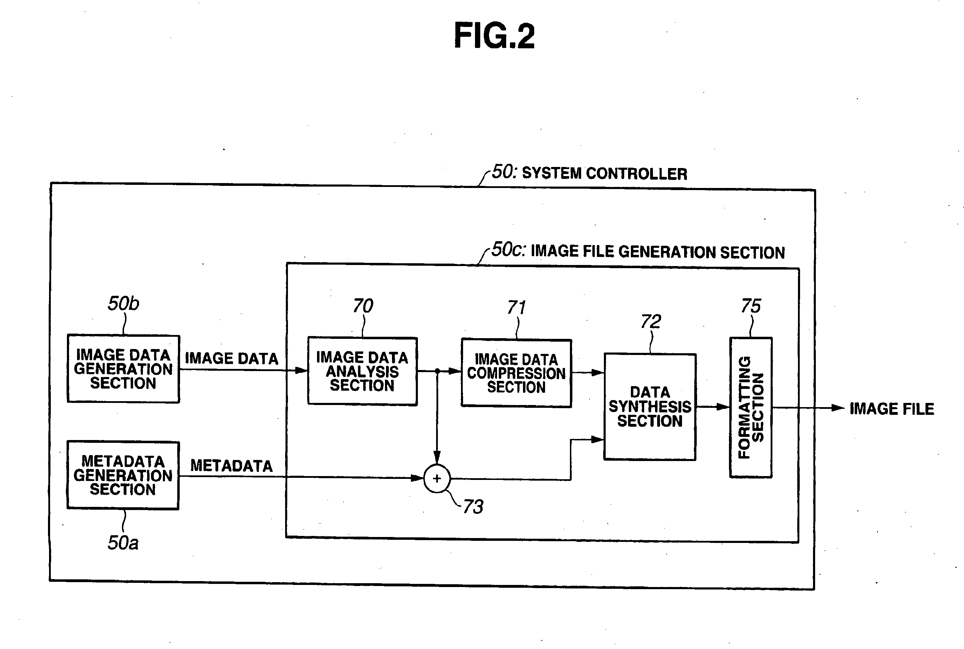

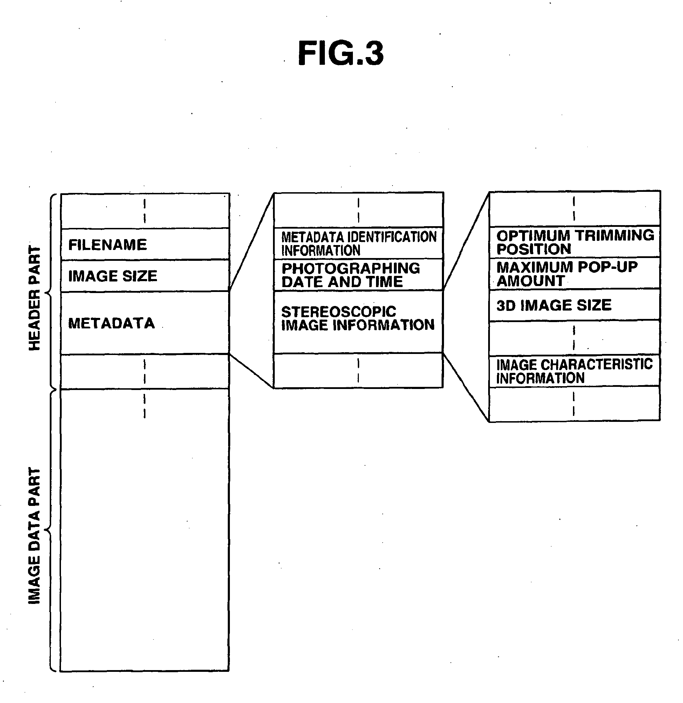

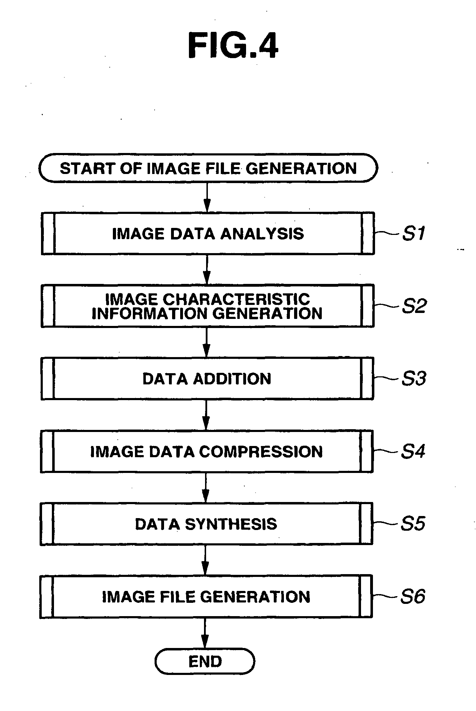

Fig. 1 is a block configuration diagram schematically showing internal configuration of an electronic camera configured to be provided with an image file processing apparatus of a first embodiment of the present invention. Fig. 2 is a block configuration diagram showing concrete configuration of an image file generation section of a system controller as the image file processing apparatus of the present embodiment. Fig. 3 is a conceptual diagram showing an example of internal configuration of an image file generated by the image file generation section in Fig. 2. Fig. 4 is a flowchart showing the flow of an operation of the image file generation section in Fig. 2.

The present embodiment shows an example of a case where the present invention is applied to an image file processing apparatus provided for an electronic camera which is configured to be provided with a photoelectric conversion device, such as an image pickup device, for performing photoelectric conversion processing of an optical image formed by a photographing optical system and record an optical image of a desired subject as an electrical image signal.

As shown in Fig. 1, the electronic camera provided with the image file processing apparatus of the present embodiment is mainly configured by a camera body 1, a lens unit 5 having a lens barrel, a stereo adaptor 10 for photographing a stereo image, a strobe 57 and the like.

The stereo adaptor 10 in the present embodiment is attachably and detachably arranged on the front side of the lens unit 5.

The stereo adaptor 10 is a mirror-type stereo adaptor which is mainly configured by multiple reflection mirrors and the like and is configured to be capable of dividing a luminous flux from a subject into a pair of right and left luminous fluxes and causing the two luminous fluxes to enter a photographing lens group 21 (to be described later) of the lens unit 5 at the same time.

Therefore, the luminous flux from the subject is led to the lens unit 5 via the stereo adaptor 10, and a subject image is formed by the lens unit 5. At this time, the subject luminous flux is divided into two by the stereo adaptor 10 and enters the lens unit 5. Then, receiving the pair of subject luminous fluxes, the lens unit 5 is adapted to form a pair of images (stereo pair images) with a predetermined parallax.

Concrete configuration of the stereo adaptor 10 is as follows. That is, the stereo adaptor 10 is configured by a pair of first reflection mirrors 11 and 12 which is arranged with a predetermined interval and which folds a luminous flux from a subject with a predetermined angle, and a pair of second reflection mirrors 13 and 14 which folds each of the luminous fluxes reflected by the pair of first reflection mirrors 11 and 12 with a predetermined angle and leads it to the photographing lens group 21 arranged at the back of the lens unit 5.

Each of the pair of first reflection mirrors 11 and 12 is arranged so that the first mirrors 11 and 12 are separated by a predetermined interval, that is, by an interval (approximately 60 mm) substantially equal to human interpupillary distance in a substantially horizontal direction. Each of the pair of first reflection mirrors 11 and 12 is arranged in a state in which each leans is inclined with a predetermined angle (for example, an angle of substantially 45 degrees) against its corresponding incident optical axis. At this time, each of the reflection surfaces of the first reflection mirrors 11 and 12 is arranged so that they face each other and face toward the subject side (that is, the forward side of the present electronic camera).

The pair of second reflection mirrors 13 and 14 are arranged at positions to face the pair of first reflection mirrors 11 and 12, respectively. The second reflection mirrors 13 and 14 are arranged in a state of being inclined with a predetermined angle (for example, an angle of substantially 45 degrees) against the optical axes of luminous fluxes reflected from the first reflection mirrors 11 and 12, respectively. At this time, each of the reflection surfaces of the second reflection mirrors 13 and 14 is arranged so that they face the reflection surfaces of the corresponding first reflection mirrors 11 or 12 and face towards the photographing lens group 21 side (that is, the backward side of the present electronic camera).

Due to such configuration, the stereo adaptor 10 is adapted to, by dividing a luminous flux from a subject into two after causing the luminous flux to enter, and causing each of the pair of luminous fluxes to be reflected toward a predetermined direction by each of the pairs of the first reflection mirrors 11 and 12 and the second reflection mirrors 13 and 14, lead each luminous flux to the photographing lens group 21 of the lens unit 5 after folding the optical axis of each luminous flux.

The pair of luminous fluxes caused to enter the lens unit 5 via the stereo adaptor 10 in this way enters an exposure control mechanism 22 via the photographing lens group 21 and is led to a half mirror 31 provided inside the camera body 1 via the exposure control mechanism 22.

The lens unit 5 is configured to have the photographing lens group 21, the exposure control mechanism 22, a lens driving mechanism 23, a lens driver 24 and an exposure control driver 25.

The photographing lens group 21 is a photographing optical system which receives a luminous flux from a subject and forms an optical subject image. The photographing lens group 21 is a main photographing optical system configured to be able to form an ordinary single image in a state in which the stereo adaptor 10 is not mounted on the front side. The photographing lens group 21 is configured to perform a focusing operation or a zooming operation by being driven by the lens driving mechanism 23.

The lens driving mechanism 23 is adapted to be driving-controlled via the lens driver 24 which is controlled by a system controller 50 provided inside the camera body 1, which is to be described later.

The exposure control mechanism 22 controls a diaphragm section and a shutter device (not shown) provided in the photographing lens group 21. The exposure control mechanism 22 is adapted to be driving-controlled via the exposure control driver 25 which is controlled by the system controller 50 described above.

The camera body 1 is mainly configured by the half mirror 31, a filter system 32, an image pickup device 34 (shown as CCD in Fig. 1), which is a photoelectric conversion device such as a charge coupled device (CCD), a CCD driver 35, a preprocess circuit 36, a digital process circuit 39, an LCD display section 40 (shown as LCD in Fig. 1), which is a display device, a card interface (IF) 41, a memory card 42, an AF sensor module 45 configured by a separator lens 46 and an AF sensor 47, the system controller 50 which not only performs overall control of the whole of the present electronic camera but also functions as an image file processing apparatus for performing various image processings of image data acquired by the electronic camera, an operation switch (shown as OPERATION SW in Fig. 1) 52 corresponding to various operation members (not especially shown), an operation display section 53, a non-volatile memory EEPROM 51, which is a various setting information storage memory, a stereo switching switch 54 (shown as STEREO SWITCHING SW in Fig. 1), and the like.

A part of the pair of luminous fluxes led to the inside of the camera body 1 from the lens unit 5 as described above is led to the image pickup device 34 via the low-pass and infrared-cut filter system 32 after passing the half mirror 31, and a pair of subject images are optically formed on the light receiving surface of the image pickup device 34.

The image pickup device 34 performs processing for converting a subject image formed on its light receiving surface to an electrical signal. When performing the photoelectric conversion processing, the image pickup device 34 is driving-controlled via the CCD driver 35 which is controlled by the system controller 50 described above. As the image pickup device 34, a common photoelectric conversion device, such as a CCD and a CMOS, is applied.

A luminous flux which enters the first reflection mirror 11, in a luminous flux which enters the stereo adaptor 10, is led to the photographing lens group 21 of the lens unit 5 via the second reflection mirror 13, and after that, it is transmitted through the photographing lens group 21 and causes one subject image to be formed on the light receiving surface of the image pickup device 34. This is an image for observation by a left eye.

Similarly, a luminous flux which enters the first reflection mirror 12, in the luminous flux which enters the stereo adaptor 10, causes one subject image to be formed on the light receiving surface of the image pickup device 34 via the second reflection mirror 14 and the photographing lens group 21. This is an image for observation by a right eye.

An image signal generated by the photoelectric conversion processing by the image pickup device 34 is inputted to the digital process circuit 39 via the preprocess circuit 36 which includes an A/D converter and the like. Receiving the inputted digital image signal, the digital process circuit 39 performs various signal processings, for example, color signal generation processing, matrix conversion processing, and other various digital signal processings to generate a digital image signal in a predetermined form, for example, a display form optimal for display or a recording form optimal for recording.

To the digital process circuit 39, not only the LCD display section 40, which is an image display device, is connected but also the memory card 42, which is a data storage section configured by a semiconductor memory, a magnetic recording medium or the like, is connected via the card interface (IF) 41.

Here, the LCD display section 40 is adapted to, when receiving image data in a form suitable for display, which is outputted from the digital process circuit 39, display an image based on the image data.

The memory card 42 is adapted to, by receiving image data in a form suitable for recording, which is outputted from the digital process circuit 39, via the card IF 41, store the image data.

The memory card 42 is commonly arranged attachably to and detachably from the camera body 1 of the present electronic camera. However, in addition to the attachable/detachable configuration, the memory card 42 may be configured, for example, so that it is fixedly arranged on an internal circuit of the present electronic camera.

The memory card 42 can be also mounted on a personal computer 60 or the like, which is an external equipment to be connected to the present electronic camera. In this case, the memory card 42 is removed from the electronic camera and mounted on a card mounting section (not shown) of the personal computer 60.

Even in a state in which the memory card 42 is mounted on the personal computer 60 or the like, the personal computer 60 or the like can read image data recorded in the memory card 42 or write and record various data into the memory card 42.

For the image data read to the personal computer 60 or the like from the memory card 42, reproduction/display, various image processings and the like can be performed in the personal computer 60.

Furthermore, the image data recorded in the memory card 42 can be printed out as an image with the use of a printer apparatus (not shown) under the control of the personal computer 60 after being read by the personal computer 60.

The half mirror 31 of the camera body 1 is arranged to lead a part of an incident luminous flux to the image pickup device 34 side by causing the part to be transmitted while leading a different part of the incident luminous flux to a predetermined direction inside the camera body 1 by reflecting the different part.

The luminous flux reflected by the half mirror 31 is led to the AF sensor module 45. The AF sensor module 45 is for detecting a focus on the basis of an incident luminous flux which has been transmitted through the photographing lens group 21.

The AF sensor module 45 is mainly configured by a separator lens 46 for dividing a pupil and an AF sensor 47 configured by a line sensor.

The system controller 50 configured by a CPU or the like is arranged to perform overall control of each constituent member provided inside the camera body 1 and the lens unit 5.

Inside the system controller 50, configuration is made to have a metadata generation section 50a, an image data generation section 50b, an image file generation section 50c, an exposure control section 50d, a photometric area setting section 50e and the like.

In addition to the lens driver 24, the exposure control driver 25, the CCD driver 35, the preprocess circuit 36, the digital process circuit 39 and the AF sensor module 45 which have been described above, the operation switch section 52, the operation display section 53, the non-volatile memory (EEPROM) 51, the stereo switching switch (SW) 54 and the like are electrically connected to the system controller 50 so that the system controller 50 appropriately controls these various constituent members.

The operation switch section 52 is configured by various switches, for example, a release switch, a photographing mode setting switch and the like (not especially shown).

The operation display section 53 is a display section for displaying the operation state of the present electronic camera, the setting state of a set operation mode and the like, and, for example, a small-size monochrome liquid crystal display device or the like is applied.

The EEPROM 51 is a non-volatile memory for storing various setting information and the like, a control program or application software and the like for realizing various operations, in the present electronic camera.

The stereo switching switch 54 is a switching switch for switching the photographing operation mode when the stereo adaptor 10 is mounted onto the lens unit 5 to perform photographing in the stereo photographing mode.

Here, switching of the photographing mode is performed by the system controller 50 in response to receiving an instruction signal from the stereo switching switch 54. In this case, as a trigger for the instruction signal of the stereo switching switch 54 being generated, such means is conceivable that, for example, a predetermined operation member is provided on the exterior of the camera body 1 of the present electronic camera, and configuration is made so that the stereo switching switch 54 is linked to the operation member. In this case, such a configuration is conceivable that an instruction signal of the stereo switching switch 54 is generated by an operator of the present electronic camera performing a predetermined operation of the operation member when attaching or detaching the stereo adaptor 10 to or from the lens unit 5, and, in response to this, the system controller 50 switches the photographing mode.

In addition to this, it is also conceivable that the operation member is configured to be linked to an operation of attaching or detaching the stereo adaptor 10 to or from the lens unit 5. In this case, a user can automatically perform switching of the photographing operation mode of the electronic camera only by performing an attaching/detaching operation of the stereo adaptor 10.

The above is not limiting, and it is further conceivable to make a configuration in which, for example, an attaching/detaching detection section is provided between the stereo adaptor 10 and the lens unit 5, the attaching/detaching state of the stereo adaptor 10 to/from the lens unit 5 is detected by the attaching/detaching detection section, and a predetermined instruction signal is generated from the stereo switching switch 54 on the basis of the result of the detection. In this case also, it becomes possible to automatically perform switching of the photographing mode by the user performing an attaching/detaching operation of the stereo adaptor 10.

The system controller 50 performs driving control of the exposure control mechanism 22 via the exposure control driver 25 to perform exposure control as well as performing driving control of the image pickup device 34 via the CCD driver 35 to perform charge accumulation and signal reading and perform photoelectric conversion processing.

An electrical signal outputted from the image pickup device 34 is transmitted to the preprocess circuit 36, and converted to a digital image signal by digital conversion processing and the like being performed at the preprocess circuit 36. After that, the digital image signal is outputted to the digital process circuit 39. Receiving this, the digital process circuit 39 performs various signal processings for the digital image signal, and after that, outputs the digital image signal to the memory card 42 via the card interface 41. Receiving this, the memory card 42 records it in a predetermined area.

The digital image signal outputted from the digital process circuit 39 is also outputted to the LCD 40. Receiving this, the LCD 40 reproduces and displays it as an image.

The strobe 57 is a flash emission device which emits a flash, and is adapted to be controlled by the system controller 50 via the exposure control driver 25 of the lens unit 5.

The exposure control section 50d of the system controller 50 is for analyzing a subject image signal about a photometric area to calculate exposure information required for exposure control.

The photometric area setting section 50e is for making photometric area settings for the exposure control section 50d.

Meanwhile, the metadata generation section 50a of the system controller 50 is metadata generation means for generating various information about image data generated by the image data generation section 50b on the basis of the image signal acquired by the image pickup device 34 and digitized via the preprocess circuit 36 (or an image indicated on the basis of the image data) as metadata. The metadata generated by the metadata generation section 50a is outputted to the image file generation section 50c.

The metadata generated by the metadata generation section 50a is information described in a header part (to be described later; see Fig. 3) of an image file.

As the various information included in the metadata, there is, for example, stereoscopic image information identifying whether image data is an ordinary single image or an integrated image (also referred to as a 3D image) for a stereo image and the like, in addition to metadata identification information, photographing date and time information and the like.

The stereoscopic image information described above is a kind of image identification information added in metadata when the image data is a stereo image. The stereoscopic image information further includes various information about the stereo image.

As the stereoscopic image information, there are, for example, stereo image identification information showing that the file is a stereo image, optimum trimming position information, which is trimming information, maximum pop-up amount information, which specifies the maximum value of depth feeling of the stereo image, image size information (also referred to as 3D size information) about the stereo image, image characteristic information and the like.

The optimum trimming position information is position information showing an image area (image frame) for which trimming is to be performed, in each of monocular images forming the stereo image. It is information showing setting of an image area optimal for stereoscopic vision at the time of reproducing an image, that is, an area used for recognition of a merged image.

The image characteristic information is information showing characteristics of an image displayed on the basis of image data generated by the image data generation section 50b. A typical form of the information is such as is configured by adding, to a part of the "image information itself or information calculated on the basis of the image information", address information capable of identifying which part it is. As the image characteristic information, there is, for example, an average value of image levels (average level information), local sampling information and the like.

Specifically, as the image characteristic information, there is, for example, pixel information at a particular address (an address specified by X and Y coordinate axes; one point or multiple points) or pixel information in a particular area, within the whole area of an image indicated by image data (that is, the whole display area of a displayed image developed as an image), and the like.

As the image characteristic information, for example, in the case of handling compressed data (for example, JPEG image data) as a target, there is various information such as, for example, the DC coefficient (a DC component; an average of pixel values in a block) of a particular block of an image indicated by the compressed image data.

Furthermore, as the image characteristic information, for example, in the case of handling compressed data (for example, JPEG image data) as raw data such as numerical data and an information string, there are information obtained by extracting predetermined information existing at a particular position in a DC coefficient information string which has been operated by data compression processing, numerical information and the like at a particular position (particular address) in numerical data constituting the compressed data, and the like.

The image data generation section 50b receives a digital image signal outputted from the digital process circuit 39, and performs image data generation processing for converting an ordinary image to data.

In the present embodiment, especially when a photographing operation is performed in a state in which the photographing operation mode is set to the stereo photographing mode, the image data generation section 50b plays a role of stereo image data generation means for performing processing for converting a stereo image (integrated image) indicating multiple monocular images obtained with a predetermined parallax between the images for the same subject image, to data to generate stereo image data.

That is, for example, when the stereo adaptor 10 is mounted on the electronic camera, and a photographing operation is executed in the stereo photographing mode, multiple subject images (in the present embodiment, a pair of subject images) are formed on the light receiving surface of the image pickup device 34 in the form of being arranged right and left.

The system controller 50 performs various controls appropriately to convert the whole image frame area, including the pair of subject images on the light receiving surface of the image pickup device 34, to an image signal indicating one image, similarly to the case of performing an ordinary plain image photographing, and performs various signal processings via the preprocess circuit 36 and the digital process circuit 39 to acquire the image signal as a digital image signal. Therefore, the image signal is such that is obtained by arranging a pair of subject images formed by the stereo adaptor 10 on one plain image in parallel, that is, a stereo image in an integrated image format.

At this time, it is possible to, instead of "performing image generation processing similarly to the case of ordinary plain image photographing and entrusting formation of an integrated image only to an optical action of the stereo adaptor 10" as described above, "set each of partial image frame areas (each of monocular image frame areas) corresponding to the right and left subject images, respectively, for the whole image frame area and rearrange each of the monocular images obtained from the monocular image frame areas on one plain image in parallel to form an integrated image". In the case of forming an integrated image by rearranging the monocular images as described above, it is also possible to obtain the multiple monocular images with a parallax by multiple image pickup sections or multiple photographing operations (for example, after the first photographing operation is performed, the camera is moved and the second photographing operation for the same subject is performed) in the stereo photographing mode, without using a stereo adaptor.

The digital image signal acquired in this way is outputted to the system controller 50 from the digital process circuit 39. Receiving this, the image data generation section 50b of the system controller 50 handles the digital image signal described above as single image data and performs processing for converting it to data. In this way, the image data generation section 50b which functions as stereo image data generation means generates stereo image data which indicates a stereo image (integrated image) constituted by a pair of monocular images obtained with a predetermined parallax between the images for the same subject image.

The image file generation section 50c is image file generation means for synthesizing general image data or image data such as stereo image data, which has been generated by the image data generation section 50b and metadata generated by the metadata generation section 50a to generate an image file in a predetermined form (format), for example, a form in conformity with the Exif standard.

Here, the outline of the internal configuration of the image file generation section 50c of the system controller 50 in the present electronic camera will be described in detail with the use of Fig. 2, and the outline of the configuration of an image file generated by the image file generation section 50c will be described in detail with the use of Fig. 3.

In the present electronic camera, the image file generation section 50c provided in the system controller 50 is mainly configured by an image data analysis section 70, an image data compression section 71, a data adder 73, a data synthesis section 72 and a formatting section 75 as shown in Fig. 2.

The image data analysis section 70 is image characteristic information generation means for, when receiving image data (general image data, stereo image data or the like) generated by the image data generation section 50b, performing data analysis processing of the image data and extracting information showing characteristics of an image indicated by the image data to generate image characteristic information.

The image data compression section 71 performs data compression processing of image data generated by the image data generation section 50b as necessary.

The adder 73 adds the image characteristic information generated by the image data analysis section 70 to metadata generated by the metadata generation section 50a.

The data synthesis section 72 performs synthesis processing of image data transmitted via the image data compression section 71 and the metadata outputted from the adder 73.

The formatting section 75 performs conversion processing of the synthesized data (the data obtained by synthesizing the image data and the metadata) which is outputted from the data synthesis section 72, to convert the data to an image file in a predetermined form (format), for example, a form in conformity with the Exif standard and output the image file.

The image file generation section 50c configured as described above functions as the image file generation means for synthesizing the image data generated by the image data generation section 50b and the metadata generated by the metadata generation section 50a to generate an image file in a predetermined form (format), as described above.

In this case, the image file generation section 50c performs processing for performing data analysis of the image data generated by the image data generation section 50b by the image data analysis section 70 (image characteristic information generation means) to generate image characteristic information, and adding the image characteristic information to the metadata generated by the metadata generation section 50a (metadata generation means).

If the image data generated by the image data generation section 50b is stereo image data indicating a single integrated image, the image file generation section 50c performs synthesis conversion processing of the one piece of stereo image data and the metadata obtained by adding the image characteristic information generated by the image data analysis section 70 to the metadata created by the metadata generation section 50a to generate one stereo image file.

In the configuration example shown in Fig. 2, the image data analysis section 70 inside the image file generation section 50c is shown in an independent form. However, the configuration is not limiting, and, for example, the image data analysis section 70 may be configured to be provided inside the image data compression section 71.

In this case, the image data compression section 71 receives the image data from the image data generation section 50b and performs analysis of the image data and, at the same time, performs compression processing of the image data as necessary. Then, image characteristic information extracted as the result of the data analysis is added to the metadata by the adder 73 and, after that, outputted to the data synthesis section 72. At the same time, the image data which has been compression-processed by the image data compression section 71 (or the image data which is not compressed, as the case may be) is also outputted to the data synthesis section 72.

The image file generated and outputted by the image file generation section 50c is in the form of having a header part and an image data part as shown in Fig. 3. Among these, in the image data part, the image data compressed by the image data compression section 71 (or the image data in an uncompressed state) is stored.

In the header part, there is stored metadata configured by various information about an image, together with the filename of and image size information about the image file.

The metadata is generated by the metadata generation section 50a as described above, and it is, for example, metadata identification information, photographing date and time information about an image, stereoscopic image information about a stereo image and the like, as shown in Fig. 3.

Among the information, the stereoscopic image information is metadata to be added when image data stored in the image data part is image data indicating a stereo image. The stereoscopic image information includes various information about the stereo image, for example, the optimum trimming position information, the maximum pop-up amount information, which specifies the maximum value of depth feeling of the stereo image, the image size information, the image characteristic information and the like, as shown in Fig. 3 and as described above.

The action of the image file generation section in an electronic camera provided with the image file processing apparatus of the present embodiment which is configured as described above will be described below with the use of the flowchart of Fig. 4.

It is assumed that an electronic camera provided with the image file processing apparatus of the present embodiment is in a state capable of performing a photographing operation (in a power-on state) and that the photographing mode is set to the stereo photographing mode by the stereo switching switch 54.

In the description below, there is shown a case of acquiring stereo image data indicating an integrated image configured by arranging a pair of monocular images in one image frame, by executing a photographing operation with the use of the stereo adaptor 10.

When a photographing operation is executed in this state, a luminous flux from a subject which has entered via the stereo adaptor 10 reaches the image pickup device 34 via the photographing lens group 21, the exposure control mechanism 22, the half mirror 31 and the filter system 32, and an optical image of the subject is formed on the light receiving surface of the image pickup device 34. The subject image formed on the light receiving surface of the image pickup device 34 then is an optical image in the form in which multiple (two) monocular images are arranged right and left.

Therefore, the image pickup device 34 outputs one image signal configured by the pair of right and left monocular images (R and L). The image signal outputted from the image pickup device 34 is inputted to the system controller 50 via the preprocess circuit 36.

The image data generation section 50b of the system controller 50 generates stereo image data indicating an integrated image in the form in which monocular images are arranged right and left, on the basis of the inputted image signal.

The metadata generation section 50a of the system controller 50 generates metadata configured by image size information, photographing date and time information and the like about an integrated image generated by the image data generation section 50b and various information about an image, including stereoscopic image information about a stereo image.

As described above, among the metadata, the stereoscopic image information includes various information about the stereo image, for example, the optimum trimming position information, the maximum pop-up amount information, which specifies the maximum value of depth feeling of the stereo image, the image size information, the image characteristic information and the like, as shown in Fig. 3 and as described above. However, among these, only the image characteristic information is generated and added at steps S2 and S3 to be described later.

The image data generated by the image data generation section 50b and the metadata generated by the metadata generation section 50a are inputted to the image file generation section 50c of the system controller 50.

In this case, the image data is inputted to the image data analysis section 70 of the image file generation section 50c, and the metadata is inputted to the adder 73 (see Fig. 2).

Then, receiving this, the image data analysis section 70 executes image data analysis processing of the inputted image data (for example, image data indicating a stereo image) at step S1 shown in Fig. 4.

Then, at step S2, the image data analysis section 70 extracts image characteristic information on the basis of the result of the data analysis at step S1 described above. The image characteristic information is outputted to the adder 73. At this time, the metadata from the metadata generation section 50a is also inputted to the adder 73.

At step S3, after performing addition processing for adding the image characteristic information inputted from the image data analysis section 70 to the metadata from the metadata generation section 50a, the adder 73 outputs the metadata to the data synthesis section 72.

On the other hand, the image data inputted to the image data analysis section 70 is also outputted to the image data compression section 71 as it is. Receiving this, the image data compression section 71 executes image data compression processing and, after that, outputs the compressed image data to the data synthesis section 72, at step S4 shown in Fig. 4.

At this time point, the addition-processed metadata added with the image characteristic information from the adder 73 and the compressed image data from the image data compression section 71 have been inputted in the data synthesis section 72.

At step S5, the data synthesis section 72 performs processing for synthesizing the metadata which includes the image characteristic information and the compressed image data. Thereby, stereo image data in a predetermined form is generated. Then, the stereo image data generated here is outputted to the formatting section 75. Then, the process proceeds to a next step S6.

At step S6, the formatting section 75 generates an image file in a form in accordance with a predetermined form (image file format). The image file generated here is outputted to a predetermined constituent section (the digital process circuit 39; see Fig. 1). -

The digital process circuit 39 performs signal processing for converting an integrated image based on the inputted image file to an image in a form optimal for being displayed on the display screen of the LCD 40 and outputs it to the LCD 40.

The digital process circuit 39 performs signal processing for converting the inputted image file to an image in a form optimal for being recorded into the memory card 42 and outputs it to the memory card 42 via the card IF 41.

As described above, the image file processing apparatus in the first embodiment described above is provided inside an electronic camera, and the image file processing apparatus is configured to, when converting an image signal acquired by a photographing operation of the electronic camera to digital image data, generate various information about the image (image data), that is, filename information, metadata and the like and synthesize the metadata and the like and the image data to generate an image file in a predetermined form, for example, in a form in conformity with the Exif standard or the like.

Therefore, in the case where the electronic camera is set in the stereo photographing mode and a photographing operation is performed, an image signal acquired by the photographing operation is converted to stereo image data in a predetermined form, for example, stereo image data indicating multiple monocular images obtained with a predetermined parallax between the images for the same subject, by the image data generation section 50b, which is stereo image data generation means. Thereby, stereo image data is generated. At the same time, information such as metadata about the generated stereo image data is generated by the metadata generation section 50a which is metadata generation means.

Then, the stereo image data generated by the image data generation section 50b and the metadata generated by the metadata generation section 50a are sent to the image file generation section 50c which is image file generation means, and the stereo image data and the metadata are synthesized to generate an image file there.

In the image file generation section 50c, the image data analysis section 70, which is image characteristic information generation means, is configured to extract information showing the characteristics of an image indicated on the basis of the stereo image data, generate the information as image characteristic information and add the image characteristic information to the metadata at that time.

Thus, in the image file processing apparatus of the present embodiment, stereo image data itself and information about an image indicated by the stereo image data (stereoscopic image information in metadata), in which image characteristic information is included, are recorded in an image file generated by the image file generation section 50c. Therefore, for example, when a stereo image is reproduced with the use of a reproduction apparatus, it becomes possible to effectively handle the image file by referring to the image characteristic information recorded in the image file, for example, it is possible to reproduce the stereo image in a form optimal for the image data of the image file without causing the "disagreement between the state of the actual image data and the contents of information about the stereoscopic image information in the metadata".

The functions of the image file generation section 50c in the image file processing apparatus of the present embodiment can be realized by software for creating an image file.

That is, by using a computer capable of executing a program which presents functions similar to those of the flowchart shown in Fig. 4, it is possible to generate an image file configured similarly to the image file generated by the image file generation section 50c shown in Fig. 2 (see Fig. 3).

An example of applying the image file processing apparatus of the present embodiment to an electronic camera has been described. However, the image file processing apparatus of the present embodiment is not limited thereto and can be quite similarly applied, for example; to an independently configured image file processing apparatus which processes image data acquired by performing photographing using an ordinary electronic camera.

Furthermore, similarly, it is possible to realize functions similar to those of the image file generation section 50c by a program (software) installed in a common personal computer or the like for processing image data acquired by an electronic camera.

In the present embodiment, there has been described a concrete example in the case where an integrated image file configured by a still image corresponding to one sheet which is configured by arranging a pair of right and left monocular images in a single image frame is acquired by one electronic camera, and a stereo image file in the form in which image characteristic information is added to stereoscopic image information about a stereo image is generated on the basis of this integrated image file. However, the form of the stereo image data itself and the method for generating the stereo image data are not limited thereto. At least when a stereo image is obtained as multiple monocular images with a parallax once, for example, in the case of acquiring image data corresponding two sheets, with a parallax for the same subject, by changing the position of an electronic camera and repeating an ordinary photographing operation of the electronic camera, the multiple monocular images may be handled as one pair without being integrated into one. As a concrete example of such a case, for example, a single file stereo image is possible in which each monocular image is assigned to each page with the use of a multi-page image file format like Multi-page TIFF. As another example, a multi-file stereo image is also possible in which each of the multiple monocular images is assigned to an individual plane image, and correspondence relationships within a set of stereo images configured by these are associated by metadata. Even in such general cases, it is easy to apply the present invention.

### (Second embodiment)

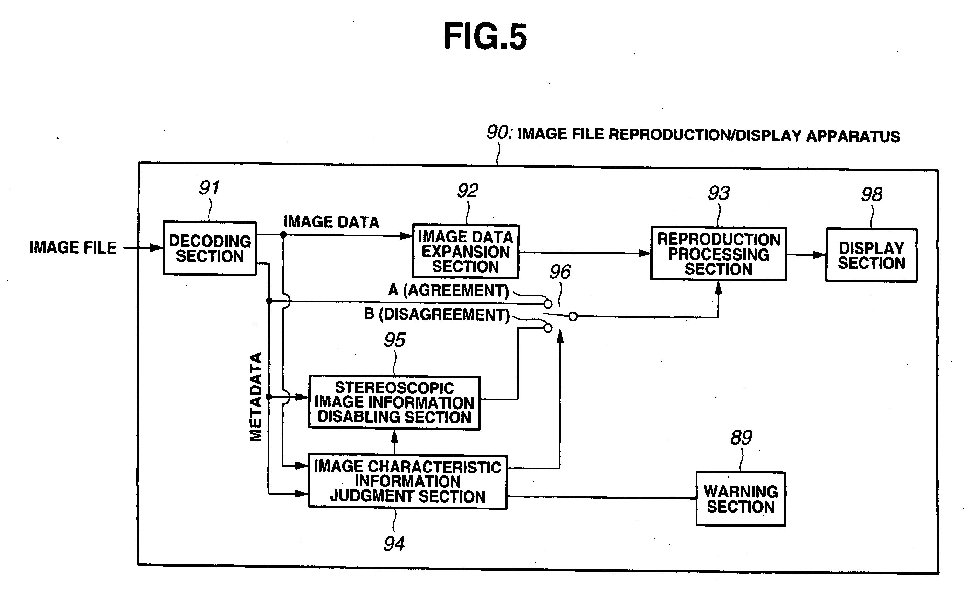

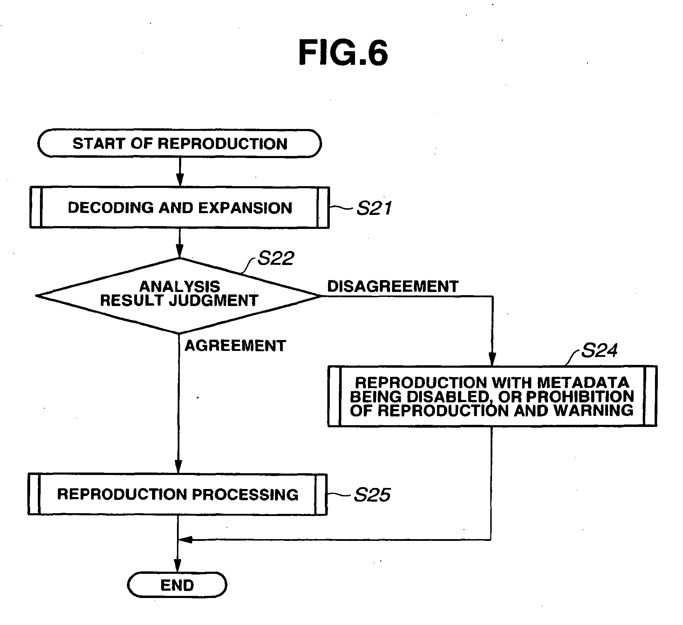

Next, a second embodiment of the present invention will be described below with the use of Figs. 5 and 6.

Fig. 5 is a block configuration diagram schematically showing configuration of an image file reproduction/display apparatus of a second embodiment of the present invention. Fig. 6 is a flowchart showing the action of the image file reproduction/display apparatus in Fig. 5 (the flow of image reproduction/display processing).

The present embodiment is an embodiment in which the present invention is applied to an image file reproduction/display apparatus. The image file reproduction/display apparatus is an apparatus which handles image data generated by the image file processing apparatus of the first embodiment described above, especially a stereo image file which includes image characteristic information about a stereo image in metadata, and is configured to perform reproduction/display processing of an image indicated by the image data of the stereo image file.

That is, an image file reproduction/display apparatus 90 of the present embodiment is configured to have mainly a decoding section 91, an image data expansion section 92, a reproduction processing section 93, an image characteristic information judgment section 94, a stereoscopic image information disabling section 95, a switching section 96, a warning section 89 and the like, as shown in Fig. 5.

By performing decoding processing of an inputted image file, the decoding section 91 takes out various data (image data and metadata) included in the image file.

To the decoding section 91, an image file or the like in a predetermined form, which is generated by the image file processing apparatus of the first embodiment described above or the like, for example, an image file in the data format shown in Fig. 3 or the like is inputted. The decoding section 91 executes decoding processing of the image file. Among various data taken out by the processing, image data is outputted to the image data expansion section 92 and the image characteristic information judging section 94, and metadata is outputted to the image characteristic information judgment section 94, the stereoscopic image information disabling section 95 and the switching section 96.

The image data expansion section 92 receives the image data outputted from the decoding section 91 and performs expansion processing. By the expansion processing, the image data expansion section 92 obtains image data which is the result of expanding and developing compressed data. Then, the uncompressed image data is outputted to the reproduction processing section 93. When the image data outputted from the decoding section 91 is uncompressed data, the uncompressed data is outputted to the reproduction processing section 93 as it is.

The reproduction processing section 93 receives the image data from the image data expansion section 92 and the metadata from the switching section 96 (the details will be described later), generates an image signal in a form optimal for reproduction/display of an image, and outputs the image signal for reproduction to a display section 98. Receiving this, the display section 98 reproduces and displays an image on its display screen.

That is, the reproduction processing section 93 and the display section 98 constitute reproduction means for reproducing and displaying a stereo image on the basis of an image file obtained by synthesizing stereo image data indicating multiple monocular images obtained with a predetermined parallax between the images for the same subject and metadata which includes image characteristic information showing the characteristics of an image indicated by the stereo image data.

The image characteristic information judgment section 94 is judgment means for, when receiving the image data and the metadata from the decoding section 91, analyzing the image data to extract image characteristic information and performing processing for comparison judgment between the image characteristic information and the image characteristic information recorded in the metadata to judge whether or not image characteristic information which the inputted image data itself has and the image characteristic information recorded in the metadata agree with each other.

The stereoscopic image information disabling section 95 receives the metadata from the decoding section 91 and performs disabling processing for disabling stereoscopic image information in the metadata at a predetermined time, that is, on the basis of the judgment result from the image characteristic information judgment section 94.

Here, the disabling processing performed by the stereoscopic image information disabling section 95 is, for example, processing equal to processing performed for an image file in which description of the item "stereoscopic image information" included in the metadata does not exist (that is, reproduction as a plane image), processing equal to processing performed for an image file in which description of information to be set for a part or all of the items in the "stereoscopic image information" included in the metadata does not exist or particular initial values or unspecified values are written (that is, reproduction as a stereo image which does not use the information or which uses the particular initial values), or the like. In this case, warning or prohibition of reproduction can be performed as necessary.

As a concrete method for information disabling processing, for example, processing for resetting a setting value or the like set for each item in metadata which has been read from an image file and held as internal data of the present apparatus to a particular initial value, processing for setting the setting value or the like to a value which indicates being unspecified, or processing for deleting the item itself is possible.

The example illustrated about the disabling processing has been described on the assumption that the present second embodiment is an image file reproduction/display apparatus and it does not make a change in a file. However, in the case where a function of making a change in the metadata of a file, like a third embodiment described later, is also provided, it is, of course, possible to perform the processing as described above for the metadata of an image file itself.

As the items to be targeted by the disabling processing, there are included, for example, items involved when a stereo image is appropriately reproduced/displayed. For example, items such as "optimum trimming position", "maximum pop-up amount" and the like are included.

As a condition for the disabling processing of stereoscopic image information in metadata being executed, a case where disagreement between pieces of image characteristic information is confirmed in the result of the judgment by the image characteristic information judgment section 94 as described later, and the like are conceivable. Therefore, the stereoscopic image information disabling section 95 is adapted to be able to receive a judgment instruction signal and the like from the image characteristic information judgment section 94.

The switching section 96 performs selection switching for selecting whether metadata to be inputted to the reproduction processing section 93 is the metadata from the decoding section 91 or the metadata outputted from the stereoscopic image information disabling section 95. The selection switching judgment by the switching section 96 is performed on the basis of the result of the judgment of the image characteristic information judgment section 94. Therefore, the switching section 96 is adapted to be able to receive a judgment instruction signal and the like from the image characteristic information judgment section 94.

Then, when receiving an instruction signal to the effect that "disagreement" has been judged, from the image characteristic information judgment section 94, the switching section 96 performs processing for switching to the side of a symbol B shown in Fig. 5 to hand over the metadata for which the disabling processing has been performed by the stereoscopic image information disabling section 95 to the reproduction processing section 93, so that a signal communication path between the stereoscopic image information disabling section 95 and the reproduction processing section 93 is secured.

Separately from the control, the image characteristic information judgment section 94 may control the reproduction processing section 93 via the switching section 96 and function as control means for prohibiting continuation of a reproduction operation by the reproduction processing section 93. In this case, it is recommended that the image characteristic information judgment section 94 simultaneously controls the warning section 89 to display a predetermined warning (to be described later).

On the other hand, when receiving an instruction signal to the effect that "agreement" has been judged, from the image characteristic information judgment section 94, the switching section 96 performs processing for switching to the side of a symbol A shown in Fig. 5 in order to hand over the metadata from the decoding section 91 to the reproduction processing section 93, so that a signal communication path is secured between the decoding section 91 and the reproduction processing section 93.

The warning section 89 is warning means for, when the result of the judgment by the image characteristic information judgment section 94 is "disagreement", issuing information to that effect to the outside of the apparatus to notify a warning, for example, to the effect that reproduction/display of an image is impossible, or the like, to the user.

As the warning section 89, for example, a sound-producing member such as a speaker, a light-emitting member such as light emitting diode (LED) and an illumination lamp, a display member such as a liquid crystal display (LCD), and the like are applied.

The action of the image file reproduction/display apparatus 90 of the present embodiment which is configured as described above (the flow of image reproduction display processing) will be described below with the use of the flowchart of Fig. 6.

First, an image file acquired by the electronic camera shown in the first embodiment described above or the like, which is in the form as shown in Fig. 3, is inputted to the present image file reproduction/display apparatus 90.

The image file inputted to the present image file reproduction/display apparatus 90 is first inputted to the decoding section 91.

Here, at step S21 in Fig. 6, the decoding section 91 performs decoding processing for the inputted image file and takes out image data and metadata. Then, the image data is outputted to the image data expansion section 92 and the image characteristic information judgment section 94, and, at the same time, the metadata is outputted to the image characteristic information judgment section 94, the stereoscopic image information disabling section 95 and the switching section 96.

Receiving this, the image data expansion section 92 performs image data expansion processing for the inputted image data, and then outputs the image data to the reproduction processing section 93. After that, the process proceeds to processing of step S22.

At step S22, receiving the image data and the metadata from the decoding section 91, the image characteristic information judgment section 94 analyzes the image data to extract image characteristic information, and performs processing for comparison judgment between the image characteristic information (an analysis result) and the image characteristic information recorded in the metadata. Here, if it is judged that the image characteristic information held by the inputted image data itself and the image characteristic information recorded in the metadata agree with each other, the image characteristic information judgment section 94 outputs a signal to instruct switching to the side of the symbol A in Fig. 5 to the switching section 96 to control the switching by the switching section 96 so that the metadata from the decoding section 91 is outputted to the reproduction processing section 93. Then, the process proceeds to next step S25.

At step S25, the reproduction processing section 93 executes reproduction/display processing of an image indicated on the basis of the inputted image data and metadata. Thereby, an image indicated based on the image file is displayed on the display section 98.

On the other hand, if judging that the image characteristic information about the inputted image data and the image characteristic information in the metadata disagree with each other, the image characteristic information judgment section 94 proceeds to processing of a next step S24.

At step S24, the image characteristic information judgment section 94 outputs a disabling instruction signal to the stereoscopic image information disabling section 95. Receiving this, the stereoscopic image information disabling section 95 performs disabling processing required as appropriately, for stereoscopic image information in the metadata received from the decoding section 91.

At the same time, the image characteristic information judgment section 94 outputs a signal to instruct switching to the side of the symbol B in Fig. 5 to the switching section 96 to control the switching by the switching section 96 so that the metadata from the stereoscopic image information disabling section 95 is outputted to the reproduction processing section 93.

Receiving this, the reproduction processing section 93 executes reproduction/display processing of an image indicated on the basis of the metadata in which a part or all of items in the stereoscopic image information are disabled and image data corresponding to the metadata. Thereby, a predetermined image is displayed on the display section 98.

The image displayed here is such that the stereoscopic image information about the image is disabled as described above. That is, in this case, an ordinary still image is reproduced and displayed on the display screen of the display section 98.

In the processing of step S24, the image characteristic information judgment section 94 may output a predetermined warning instruction signal to the warning section 89 at the same time when each control described above is performed. The warning section 89 which has received the warning instruction signal issues a predetermined warning, for example, sound production, light emission, screen display using the display section, or the like. Thereby, it is notified to the user that the stereoscopic image information in the metadata of the image file constituting an image being reproduced and displayed is disabled.

In the above example, as the operation performed in the case of "disagreement", disabling processing of stereoscopic image information in metadata is performed, and after that, reproduction/display of an ordinary still image is performed on the basis of the metadata and image data.

As processing of step S24 different from the above, for example, it is also possible to, when "disagreement" is judged by the image characteristic information judgment section 94, execute the warning notification processing by the warning section 89 at the same time when the processing for prohibiting an image reproduction operation by the reproduction processing section 93 is performed.

As described above, in the image file reproduction/display apparatus 90 of the present embodiment, after metadata and image data are taken out of an image file inputted at the time of performing reproduction/display processing of an image, by the decoding section 91, image characteristic information (an analysis result) obtained from the image characteristic information judgment section 94 analyzing actual image data and image characteristic information in the metadata taken out by the decoding section 91 are compared, and ordinary reproduction/display processing is performed if both agree with each other, while, if it is judged that the pieces of image characteristic information do not agree (disagree) with each other, information about the stereoscopic image information in the metadata is disabled and reproduction processing is performed, on the assumption that the actual image data and the metadata do not correlate with each other, and a warning to the effect is issued. Or, when disagreement between both is confirmed, reproduction processing is prohibited, and a warning is issued.

Here, as an example of the case where disagreement occurs between image characteristic information as an analysis result of image data and image characteristic information recorded in metadata, for example, a case as shown below is conceivable.

That is, in the case where, for a stereo image file generated by the image file processing apparatus of the first embodiment described above, some image processing is performed for image data with the use of, for example, a non-stereo-image-compliant apparatus (or non-stereo compliant software) or the like and the image file is updated, update processing is normally performed for image data of the image file which has been updated by the non-stereo-image-compliant apparatus, while, as for information about stereoscopic image information in metadata, especially image characteristic information and the like, the state before the image data update is still held because the information cannot be handled by the non-stereo-compliant apparatus.

This means that, as a result of some image processing being performed for the image data included in the image file, the contents of the image characteristic information about the actual image data and the contents of the image characteristic information in the stereoscopic image in the metadata do not correspond to each other.

Therefore, in the image file reproduction/display apparatus of the present embodiment, when reproduction/display processing of an image is performed, comparison is performed between image characteristic information extracted from image data of an inputted image file and image characteristic information recorded in the metadata of the image file, and it is judged whether both of the pieces of image characteristic information agree with each other. Thereby, it is judged whether or not the image data of the image file has been processed by a non-stereo-image-compliant apparatus (or non-stereo-compliant software) before.

That is, if the pieces of image characteristic information in the inputted image file do not agree with each other, it is judged that image processing, such as working processing and editing processing, by a non-stereo-image-compliant apparatus (or non-stereo-compliant software), has been performed before for the image file.

In the case where an image file in such a state, that is, an image file in which correlation is not kept between image data and metadata is inputted into a common and general stereo-compliant image file reproduction/display apparatus, it is not possible to display a stereo image optimal for being displayed because the "disagreement between the state of the actual image data and the contents of information about the stereoscopic image information in the metadata" occurs, and, for example, it occurs that stereoscopic vision becomes impossible or that strong fatigue accompanies even though stereoscopic vision is possible.

In the image file reproduction/display apparatus 90 of the present embodiment, it is possible to, if an image file in a state in which image data and metadata are inconsistent with each other is inputted, prohibit reproduction/display of an inappropriate stereo image by handling the image file not as a stereo image file but as an ordinary general plane image file, by the means as described above.

Or, by regarding the image file as a stereo image file which originally does not have such metadata, performing standard screen display control which is not based on the data and giving a notification to that effect to the user, it is possible to prompt the user to appropriately perform manual adjustment of display control. Or, by prohibiting image display itself as well as issuing a warning, it is possible to give the user a notification to that effect.

The functions of the image file reproduction/display apparatus 90 of the present embodiment can be realized by software having similar functions.

That is, by using a computer capable of executing a program which presents functions similar to those of the flowchart shown in Fig. 6, it is possible to perform data analysis and judgment of the result of the analysis by the image characteristic information judgment section 94 shown in Fig. 5.

The image file reproduction/display apparatus of the present embodiment has been described as a single reproduction/display apparatus. However, the image file reproduction/display apparatus of the present embodiment is not limited thereto and can be quite similarly applied, for example, to a reproduction/display apparatus which is mounted on an electronic camera or the like to confirm photographed and recorded images.

Furthermore, it is possible to realize functions similar to those of the image file reproduction/display apparatus described above by a program (software) installed in a common personal computer and the like for processing image data acquired by an electronic camera or the like.

In the present embodiment, the image characteristic information judgment section 94 is adapted to extract image characteristic information when receiving image data from the decoding section 91. However, the image characteristic information judgment section 94 is not limited to the configuration. For example, the image characteristic information judgment section 94 may be configured to receive image data from the image data expansion section 92 and metadata from the decoding section 91.

For example, if an image file inputted to the image file reproduction/display apparatus 90 is an image file having a file structure configured by compressed image data and metadata, the compressed image data and the metadata are generated by decoding processing at the decoding section 91. Between these data, the metadata is outputted to the image information judgment section 94 similarly to the present embodiment (see Fig. 5), while the compressed image data from the decoding section 91 is outputted to the image data expansion section 92, and expansion processing is performed there. Then, the image data which has been expansion-processed by the image data expansion section 92 is outputted to the image characteristic information judgment section 94.

Accordingly, receiving the expansion-processed image data from the image data expansion section 92, the image characteristic information judgment section 94 executes image data analysis processing, and extraction of image characteristic information is performed. Other configurations, operations and advantages are quite similar to those of the second embodiment described above.

### (Third embodiment)

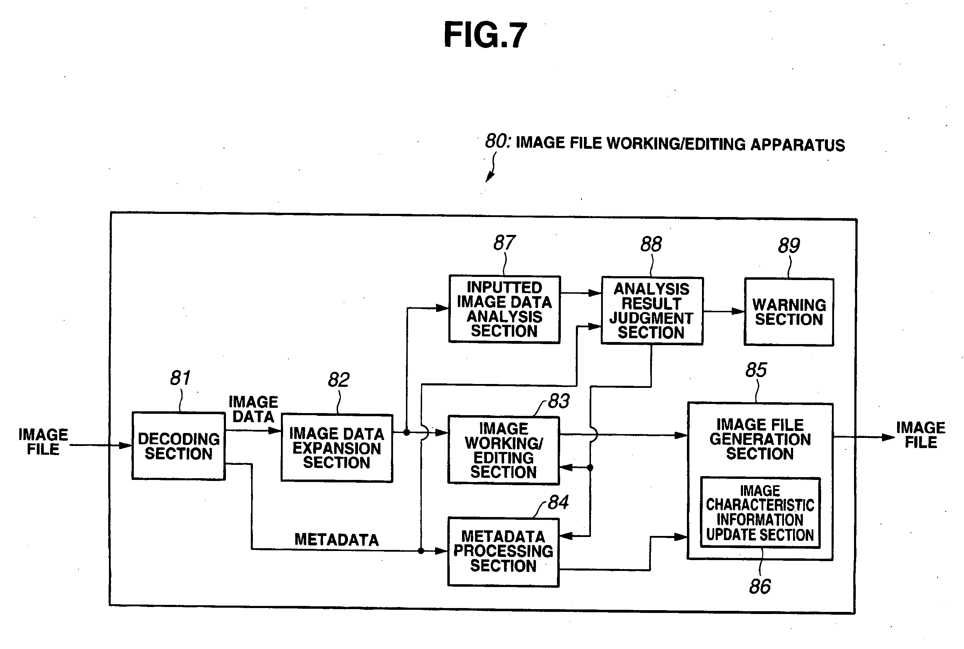

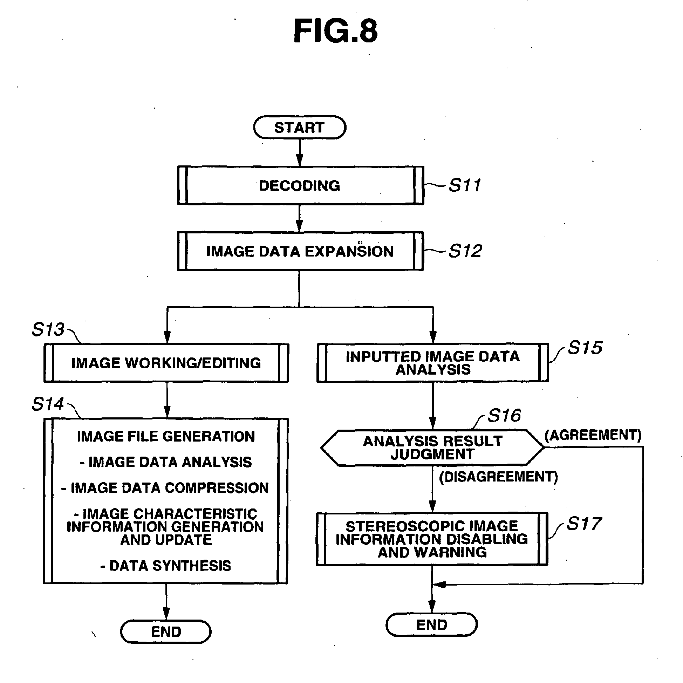

Next, a third embodiment of the present invention will be described below with the use of Figs. 7 and 8.

Fig. 7 is a block configuration diagram schematically showing configuration of an image file working/editing apparatus of a third embodiment of the present invention. Fig. 8 is a flowchart showing the action of the image file working/editing apparatus in Fig. 7 (the flow of image file generation processing).

The present embodiment is an embodiment in which the present invention is applied to an image file working/editing apparatus. The image file working/editing apparatus is an apparatus which performs working/editing processing of an image file generated by the image file processing apparatus of the first embodiment described above.

An image file working/editing apparatus 80 of the present embodiment is configured to have mainly a decoding section 81, an image data expansion section 82, an image working/editing section 83, a metadata processing section 84, an image file generation section 85, an inputted image data analysis section 87, an analysis result judgment section 88, a warning section 89 and the like as shown in Fig. 7.

An image file inputted to the present image file working/editing apparatus 80 is, for example, a stereo image file or the like in the form in which stereo image data indicating multiple monocular images obtained with a predetermined parallax between the images for the same subject and metadata about the stereo image data are synthesized. Specifically, the image file is, for example, an image file or the like generated by the image file processing apparatus or the like of the first embodiment described above, that is, an image file or the like configured in the data format in the form shown in Fig. 3.

By performing decoding processing of an inputted image file, the decoding section 81 takes out various data (image data and metadata) included in an image file. Then, between the various data taken out by the decoding processing by the decoding section 81, the image data is outputted to the image data expansion section 82, and the metadata is outputted to the metadata processing section 84 and the analysis result judgment section 88.

The image data expansion section 82 receives the image data outputted from the decoding section 81 and performs image expansion processing. By the image expansion processing by the image data expansion section 82, image data which is the result of expanding and developing compressed data is obtained.

The image data in an uncompressed state obtained in this way is outputted to the inputted image data analysis section 87 and the image working/editing section 83 as described above.

When the image data outputted from the decoding section 91 is uncompressed data, the uncompressed data is outputted to the inputted image data analysis section 87 and the image working/editing section 83 as it is.

To the metadata processing section 84, the metadata outputted from the decoding section 81 is inputted, and an instruction signal (for example, a disabling instruction signal or the like) and the like outputted in response to the result of judgment by the analysis result judgment section 88 are inputted.

The image working/editing section 83 is image working/editing means for, when receiving stereo image data inputted via the decoding section 81 and the image data expansion section 82 described above, executing working/editing processing of an image in accordance with a desired working operation or an editing operation performed by an operation of various operation members (not especially shown; operation members and the like arranged on the exterior of the apparatus and the like) by the user.

The image file generation section 85 is image file generation means for performing data synthesis processing of the stereo image data outputted from the image working/editing section 83 and the metadata outputted from the metadata processing section 84 to generate a stereo image file in a predetermined form, that is, in the form shown in Fig. 3.

The internal configuration of the image file generation section 85 is substantially the same as the configuration of the image file generation section 50c in the first embodiment described above. In addition to an image data analysis section, an image data compression section, a data synthesis section, a formatting section and the like, the image file generation section 85 of the present embodiment is configured to be further provided with an image characteristic information update section 86 as shown in Fig. 7.

The image characteristic information update section 86 is adapted to perform processing for updating, for the metadata from the metadata processing section 84, image characteristic information generated by an image data analysis section (not shown) in the image file generation section 85, that is, image characteristic information generated on the basis of the image data after image working/editing processing.

The metadata inputted to the image characteristic information update section 86 is metadata taken out of an image file inputted to the image file working/editing apparatus 80 first or metadata for which disabling processing (to be described later) has been performed. Image characteristic information included in the metadata is not information corresponding to the image data after being working/editing-processed.

In the image file working/editing apparatus 80 of the present embodiment, the image file generation section 85 is adapted to receive image data from the image working/editing section 83, for example, the newest stereo image data after image working/editing processing has been performed for an image at the image working/editing section 83, perform data analysis processing by an image data analysis section (not shown), extract image characteristic information based on the stereo image data, and perform update processing of image characteristic information on the basis of the image characteristic information.

That is, the image characteristic information update section 86 is image characteristic information update means for updating image characteristic information in accordance with the contents of working/editing processing of image data performed by the image working/editing section 83 (image working/editing means).

Then, the image file generation section 85 is adapted to add the image characteristic information updated by the image characteristic information update section 86 to the metadata and generate an image file.

On the other hand, the image data outputted from the image data expansion section 82 (in the uncompressed state) as described above is outputted to the image working/editing section 83, and, at the same time, the image data is also outputted to the inputted image data analysis section 87.

The inputted image data analysis section 87 performs data analysis of image data included in an image file which is inputted to the present image file working/editing apparatus 80 first, and extracts image characteristic information based on the image data. The image characteristic information extracted by the inputted image data analysis section 87 is outputted to the analysis result judgment section 88.

The analysis result judgment section 88 is judgment means for performing comparison judgment between the result of analysis by the inputted image data analysis section 87, that is, image characteristic information and image characteristic information included in the metadata from the decoding section 81 to judge whether or not both of the pieces of information agree with each other.

That is, the inputted image data analysis section 87 and the analysis result judgment section 88 in the image file working/editing apparatus 80 of the present embodiment has the functions of the image characteristic information judgment section 94 in the second embodiment described above.

The analysis result judgment section 88 functions as control means for outputting a predetermined instruction signal based on the result of the judgment to the warning section 89, the metadata processing section 84, the image working/editing section 83 and the like to control these constituent sections.

That is, if a judgment result to the effect that the pieces of image characteristic information do not agree (disagree) with each other is given at the analysis result judgment section 88, the analysis result judgment section 88 outputs a warning instruction signal to the warning section 89 to control the warning section 89.

At the same time, the analysis result judgment section 88 outputs an instruction signal instructing disabling processing for disabling stereoscopic image in the metadata, to the metadata processing section 84 to control the metadata processing section 84.

Furthermore, the analysis result judgment section 88 may output an instruction signal for prohibiting execution of image working/editing processing, to the image working/editing section 83 to control the image working/editing section 83, as the case may be.

On the other hand, if a judgment result to the effect that the pieces of image characteristic information agree with each other is given at the analysis result judgment section 88, the analysis result judgment section 88 is adapted to output an instruction signal which permits execution of image working/editing processing, to the image working/editing section 83.

The warning section 89 is warning means for, when the result of the judgment by the analysis result judgment section 88 is "disagreement", issuing information to that effect to the outside of the apparatus to notify a warning, for example, to the effect that working/editing processing of an image is impossible, or the like, to the user. As the warning section 89, for example, a sound-producing member such as a speaker, a light-emitting member such as light emitting diode (LED) and an illumination lamp, a display member such as a liquid crystal display (LCD), and the like are applied.

The action of the image file generation section 85 in the image file working/editing apparatus 80 of the present embodiment configured as described above will be described below with the use of the flowchart of Fig. 8.

First, an image file acquired by the electronic camera shown in the first embodiment described above or the like, which is in the form shown in Fig. 3, is inputted to the present image file working/editing apparatus 80.

The image file inputted to the image file working/editing apparatus 80 is first inputted to the decoding section 81.

At step S 11 in Fig. 8, a decoding processing sequence is executed. That is, the decoding section 81 performs decoding processing of the inputted image file and takes image data and metadata out of the image file. Then, the taken-out image data is outputted to the image data expansion section 82. At the same time, the taken-out metadata is outputted to the metadata processing section 84 and the analysis result judgment section 88. After that, the process proceeds to processing of step S 12.

At step S12, an image data expansion processing sequence is executed. That is, the image data expansion section 82 performs image data expansion processing of the inputted image data. The image data expanded thereby is temporarily stored in an internal memory section (not shown) of the present image file working/editing apparatus 80. Then, the image data is outputted to the inputted image data analysis section 87 and the image working/editing section 83.

Here, after the processing of step S12 ends, the processing process for the image data outputted to the image working/editing section 83 proceeds to processing of step S 13. The processing process for the image data outputted to the inputted image data analysis section 87 proceeds to processing of step S15. After the processing sequence of step S 12 ends, the processing flow branches, and two processings advance in parallel.

First, the flow of the processing branched to processing of step S13 will be described.

At step S13, an image working/editing processing sequence is executed. That is, the image working/editing section 83 performs desired working processing and editing processing for the inputted stereo image data appropriately.

In this case, the user performs a desired working operation and editing operation appropriately using a predetermined operation member and the like which is linked to the image working/editing section 83. In response to the operations, the image working/editing section 83 executes working/editing processing of the inputted stereo image data. Then, when a desired image working/editing operation by the user ends, the user operates a predetermined operation member or the like to perform an operation of storing the worked and edited image data. When the operation instruction occurs, the image working/editing section 83 outputs the image data to the image file generation section 85. From the metadata processing section 84, the metadata is outputted to the image file generation section 85. After that, the process proceeds to processing of step S 14.

The image working/editing processing of the stereo image data executed at the image working/editing section 83 and the operation procedure performed therefor by the user are similar to processing performed in a conventional apparatus capable of performing working/editing processing of an image file, for example, such as cutout of an area, deformation and image quality correction. However, such that has been especially devised to be convenient for working/editing of stereo image data is desirable.

Here, supplementary description about this device will be given below. For example, it is natural that specification of an area (area selection) by dragging of a mouse cursor in working/editing processing of an ordinary plane image is performed by paying attention to one position at a time. However, for an integrated image in which monocular images are arranged right and left, it is devised that, by making a configuration in a manner in which area specification performed for any one (for example, left) monocular image is automatically reflected on the same corresponding area of the subject in the other (for example, right) image, the corresponding two areas are specified at the same time, and, therefore, it is also devised that, in the case of performing image quality correction processing (for example, image quality adjustment such as brightness, color, gamma and sharpness or image effect such as texture and posterization) for the corresponding two areas selected in that way, it is prohibited to perform different processings on the right and left and (at least substantially) the same processings are performed. Such devices, that is, configuration for executing characteristic processing itself has a great effect of enabling any working/editing of a stereo image to be easily performed without damaging the quality as a stereo image in the working/editing.

At step S14, an image file generation processing sequence is executed. The image file generation processing executed here is similar to the image file generation processing in the first embodiment described above (see the flowchart of Fig. 4).

That is, the metadata processing section 84 first interprets especially image size information, photographing date and time information and the like about an integrated image which has been generated and various stereoscopic image information about a stereo image, among the metadata obtained from the decoding section 81, and updates values of data required to be changed, taking into account the effect of the image working performed at the image working/editing section 83.

Here, the metadata update will be described by giving a specific example. The stereoscopic image information in the metadata includes various information about the stereo image, for example, optimum trimming position information, the maximum pop-up amount, which specifies the maximum value of depth feeling of the stereo image, image size information and the like, as described above. The optimum trimming position information will be described as an example. It is assumed that the metadata of the image file which has just been inputted is reliable.

Now, if it is assumed that the values of the optimum trimming position information written in the inputted stereo image file are X0% in the horizontal direction and Y0% in the vertical direction (X0≠100, Y0≠100) (the expression here is simplified for convenience though the actual optimum trimming position information is generally expressed more detailedly, for example, by individual specification of coordinates), and that the processing performed at the image working/editing section 83 is to perform trimming of the inputted image on the basis of the optimum trimming position information, then the optimum trimming position for the worked image is to be the whole area (100% in the horizontal direction and 100% in the vertical direction). Therefore, in this case, the values of the optimum trimming position are updated thereto.

If the processing performed at the image working/editing section 83 is, for example, only image quality correction processing for sharpness and the like, the optimum trimming position information is not influenced at all, and therefore, the optimum trimming position information is not updated. (It is self-evident that, even if processing for updating an inputted value to the same value is performed, the result is equivalent to the inputted value.)

The image file generation section 85 performs image data analysis processing by an image data analysis section (not shown) for the inputted stereo image data which has been edited, and extracts image characteristic information on the basis of the result of the analysis to generate the data of the image characteristic information. Furthermore, image data compression processing of the edited stereo image data by an image data compression section (not shown) is performed to generate compressed image data. Here, the image data analysis section not shown, in the image file generation section 85 is similar to the inputted image data analysis section 87. Basically, the image data analysis section performs the same processing as the processing which the inputted image data analysis section 87 performs for (the) expanded image data which is outputted by the image data expansion section 82. Then, the image characteristic information update section 86 performs update processing for reflecting the newly extracted image characteristic information described above on the image characteristic information in the metadata from the metadata processing section 84, by the processing of step S13 described above to generate new metadata.

Then, synthesis processing of the compressed image data which has been compression-processed and the metadata in which the image characteristic information has been updated is performed at a data synthesis section (not shown), and a stereo image file in a predetermined form (the file format shown in Fig. 3) at a formatting section (not shown) is generated and outputted. Then, the series of processings is ended.

The flow of the processing branched to processing of step S15 after the processing of step S12 described above will be described.

At step S15, an inputted image data analysis processing sequence is executed. That is, the inputted image data analysis section 87 performs image data analysis processing of image data included in the image file inputted to the image file working/editing apparatus 80 first to extract image characteristic information, and outputs the image characteristic information according to the analysis result to the analysis result judgment section 88. After that, the process proceeds to processing of step S16.

At step S16, an analysis result judgment processing sequence is executed. That is, receiving the image characteristic information according to the result of the analysis by the inputted image data analysis section 87 in the processing of step S 15 described above and the metadata from the decoding section 81 in the processing of step S11 described above, the analysis result judgment section 88 performs processing for comparison judgment between the image characteristic information according to the analysis result described above and the image characteristic information included in the metadata. Then, judgment is performed about whether or not the image characteristic information extracted from the inputted image data itself and the image characteristic information included in the metadata agree with each other. Here, if disagreement between the pieces of image characteristic information is confirmed, the process proceeds to processing of step S 17.

At step S17, stereoscopic image information disabling processing and warning processing sequences are executed. That is, if it is confirmed that the image characteristic information about the actual inputted image data and the image characteristic information included in the metadata disagree with each other, as a result of the judgment by the analysis result judgment section 88 in the processing of step S16 described above, then it is judged that, for the inputted stereo image data, working/editing processing and the like of the image data has been already performed by a different non-stereo-image-compliant apparatus, software or the like, and therefore, the stereo image data is at least in a state inappropriate for being viewed as a stereo image with the use of the metadata values which influence stereoscopic viewing as they are.

Therefore, in this case (in the case where the pieces of image characteristic information disagree with each other), the analysis result judgment section 88 outputs an instruction signal (a disabling instruction signal) which instructs disabling processing for disabling stereoscopic image information in the metadata, to the metadata processing section 84 to control the metadata processing section 84 at step S17. Receiving this, the metadata processing section 84 executes disabling processing of the stereoscopic image information among the metadata, executes update processing of the metadata, and outputs the updated metadata to the image file generation section 85. The disabling of the stereoscopic image information is performed irrespective of whether the S13-side image working/editing processing is executed or not.

At the same time, the analysis result judgment section 88 outputs a warning instruction signal to the warning section 89 to control the warning section 89. Receiving this, the warning section 89 issues a predetermined warning, for example, a warning such as sound production, light emission and display.

In the present embodiment, image working/editing itself is always executable. However, the analysis result judgment section 88 may output an instruction signal for prohibiting execution of image working/editing processing, to the image working/editing section 83 to control the image working/editing section 83 as the case may be. Receiving this, the image working/editing section 83 executes processing for prohibiting execution of image working/editing processing and displays information to the effect that the working/editing processing is in a prohibited state. After that, a series of processings is ended. That is, in this case, the image working/editing processings being simultaneously executed in parallel are prohibited (at least result reflection is prohibited though the processing operation itself may be performed).

On the other hand, if it is confirmed that the pieces of image characteristic information agree with each other in the processing of step S 16 described above, there is not a doubtful point in the metadata, and therefore, the series of processings is completed as-is.

As described above, when it is judged that image characteristic information about actual inputted image data and image characteristic information included in metadata disagree with each other, and as a result, stereoscopic image information in the metadata is disabled, it means that stereoscopic image information about a stereo image is disabled in the image file which includes the metadata, and therefore, it is avoided that, when the image file is used as a stereo image, the image file is reproduced and viewed as a stereoscopic image with the metadata values, which influence stereoscopic viewing, wrongly used.

When it is judged that image characteristic information about actual inputted image data and image characteristic information included in metadata agree with each other, and it is judged that the file is a stereo image file in a regular state, the metadata in which stereoscopic image information (including the image characteristic information) has been updated is automatically added to a stereo image file generated after performing working/editing processing is performed, in accordance with the contents of the working/editing processing, and therefore, the stereo image file in a regular state is generated.

As described above, the image file working/editing apparatus of the third embodiment described above is configured to, even when working/editing processing of image data is performed, generate a stereo image file in the form that stereoscopic image information (including image characteristic information) in accordance with the contents of the working/editing processing has been automatically updated. Therefore, even if working/editing processing of image data having stereoscopic image information is performed with the use of the image file working/editing apparatus of the present embodiment, the relation between the image data after the working/editing processing and metadata never become inconsistent with each other, and it is possible to cause the metadata to be always corresponding to the image data.

In the present embodiment, the flow of the processing after the image working/editing processing at step S13 described above and the flow of the processing after the inputted image data analysis processing at step S15 are executed in parallel.

That is, the image working/editing processing can be immediately executed at the same time when an image file is inputted. If judgment based on an analysis result of inputted image data is "disagreement", stereoscopic image information in metadata corresponding to the image data being edited is disabled. At the same time, the user can know that a part of the metadata has been disabled by a warning by the warning section 89.

However, such a processing example is not limiting. For example, as for the image data editing/working processing itself, execution of the image working editing processing may be permitted after waiting for a judgment result based on the analysis result of the inputted image data and receiving the judgment result. In this case, it is judged whether the image data of the inputted image file has effective stereoscopic image information, prior to performing the image working/editing processing. For example, there is an advantage that, in the case of desiring to select only such image data as has effective stereoscopic image information and perform image working/editing thereof, it is possible to avoid a wasteful working/editing operation from being performed.

The functions by the image file working/editing apparatus 80 of the present embodiment can be realized by software having similar functions. That is, by using a computer capable of executing a program which presents functions similar to those of the flowchart shown in Fig. 8, it is possible to perform image working/editing processing of image data of an inputted image file and inputted image data analysis processing for the inputted image file. Therefore, it is possible to realize functions similar to those of the image file working/editing apparatus described above by a program (software) installed in a common personal computer or the like (for example, for the purpose of processing image data acquired by an electronic camera or the like).

The image file working/editing apparatus of the present embodiment has been described as a single working/editing apparatus. However, the image file working/editing apparatus of the present embodiment is not limited thereto and can be quite similarly applied, for example, to a working/editing apparatus which is mounted on an electronic camera or the like to perform working/editing processing of a photographed and recorded image file, and may be included in the reproduction/display apparatus as the second embodiment.

In the present embodiment, image data from the image data expansion section 92 is inputted to the inputted image data analysis section 87. However, the configuration is not limiting. For example, the inputted image data analysis section 87 may receive image data from the decoding section 91 and execute data analysis for extracting image characteristic information.

This is substantially similar to the relation about whether image data inputted to the image characteristic information judgment section 94 is from the decoding section or from the image data expansion section in the second embodiment described above.

The present invention is not limited to the embodiments described above. It is, of course, possible to make various modifications and applications.

For example, though an image file processing apparatus, an image file reproduction/display apparatus and an image file working/editing apparatus in a twin-lens stereo system corresponding to both right and left eyes have been illustrated in each of the embodiments described above, these are not limiting. For example, the present invention is, of course, applicable similarly to a multi-view stereo system having three or more lens. In addition, the present invention is also applicable to various apparatuses which handle moving images.

Furthermore, inventions at various stages are included in the embodiment described above, and various inventions can be extracted by appropriate combinations of components among the disclosed multiple components. For example, in the case where, even if some components are deleted from all the components shown in one of the embodiments described above, the problem stated in Means for Solving the Problem can be solved, and the advantages stated in advantages of the invention can be obtained, the configuration in which the components are deleted can be extracted as an invention.

The present application is filed, with Japanese Patent Application No. 2007-006449 applied for a patent to Japan on January 15, 2007 as a base for claim of priority.

## Claims

1. An image file processing apparatus which handles stereo image data indicating multiple monocular images obtained with a predetermined parallax between the images for a same subject, the image file processing apparatus comprising:
stereo image data generation means (50b) for generating the stereo image data indicating the multiple monocular images obtained with the predetermined parallax between the images for the same subject;
metadata generation means (50a) for generating metadata about the stereo image data;
image characteristic information generation means (70) for generating image characteristic information showing characteristics of an image indicated on the basis of the stereo image data, wherein the image data is compressed and the image characteristic information includes a DC component as an average of pixel values in a particular block of the image indicated by the compressed image data; and
image file generation means (50c) for synthesizing the stereo image data generated by the stereo image data generation means (50b) and the metadata generated by the metadata generation means (50a) to generate an image file, wherein the image file generation means (50c) adds the image characteristic information generated by the image characteristic information generation means (70) to the metadata generated by the metadata generation means (50a).

2. The image file processing apparatus according to claim 1, wherein the average of the pixel values in the DC component of the particular block is concerned with data compression processing in a JPEG compressed image.

3. An image file reproduction apparatus which handles stereo image data indicating multiple monocular images obtained with a predetermined parallax between the images for a same subject, the image file reproduction apparatus comprising:
reproduction means (93, 98) for reproducing and displaying a stereo image on the basis of a stereo image file configured by synthesizing the stereo image data and metadata which includes image characteristic information showing characteristics of an image indicated by the stereo image data, wherein the image data is compressed and the image characteristic information includes a DC component as an average of pixel values in a particular block of the image indicated by the compressed image data; and
judgment means for performing comparison judgment between image characteristic information extracted from image data of a stereo image file inputted to the image file reproduction apparatus and image characteristic information included in metadata of the stereo image file inputted to the image file reproduction apparatus.

4. The image file reproduction apparatus according to claim 3, further comprising warning means (89) for issuing a warning in a case where disagreement is judged by the judgment means (94).

5. The image file reproduction apparatus according to claim 3, further comprising control means (88) for prohibiting continuation of a reproduction operation by the reproduction means (93, 98) in a case where disagreement is judged by the judgment means (94).

6. The image file reproduction apparatus according to claim 5, further comprising warning means (89) for issuing a warning in a case where disagreement is judged by the judgment means (94).

7. The image file reproduction apparatus according to claim 3, further comprising control means (88) for performing disabling processing for disabling a part or all of information included in metadata in a case where disagreement is judged by the judgment means (94).

8. The image file reproduction apparatus according to claim 5, further comprising warning means (89) for issuing a warning in a case where disagreement is judged by the judgment means (94).

9. The image file reproduction apparatus according to claim 5, wherein, in a case where disagreement is judged by the judgment means (94), an image reproduction operating by the reproduction means (93, 98) is continued by handling the image data as an ordinary plane image after performing disabling processing of a part or all of information included in the metadata.

10. An image file working/editing apparatus which handles stereo image data indicating multiple monocular images obtained with a predetermined parallax between the images for a same subject, the image file working/editing apparatus comprising:
image working/editing means (83) for performing image working/editing processing for a stereo image file configured by synthesizing the stereo image data and metadata which includes image characteristic information showing characteristics of an image indicated by the stereo image data as a target, wherein the image data is compressed and the image characteristic information includes a DC component as an average of pixel values in a particular block of the image indicated by the compressed image data; and
stereo image file generation means for synthesizing the stereo image data which has been image-working/editing-processed by the image working/editing means (83) and the metadata to generate a stereo image file; wherein
the stereo image file generation means has image characteristic information update means (86) for updating the image characteristic information in accordance with the contents of the working/editing processing performed by the image working/editing means, and adds the image characteristic information updated by the image characteristic information update means to the metadata to generate the stereo image file.

11. The image file working/editing apparatus according to claim 10, further comprising judgment means (88) for extracting image characteristic information indicting characteristics of an image indicated on the basis of stereo image data of an inputted stereo image file and performing comparison judgment between the image characteristic information and image characteristic information included in metadata of the inputted stereo image file.

12. The image file working/editing apparatus according to claim 11, further comprising warning means (89) for issuing a warning in a case where disagreement is judged by the judgment means (88).

13. The image file working/editing apparatus according to claim 11, wherein a part or all of information included in the metadata is disabled in a case where disagreement is judged by the judgment means (88).

14. The image file working/editing apparatus according to claim 13, further comprising warning means (89) for issuing a warning in a case where disagreement is judged by the judgment means (88).

15. The image file working/editing apparatus according to claim 13, wherein the working/editing processing of the image data by the image working/editing means (83) is prohibited in a case where disagreement is judged by the judgment means (89).

## Patentansprüche

1. Vorrichtung zur Bilddateiverarbeitung, die Stereobilddaten handhabt, welche mehrere monokulare Bilder angeben, die mit einer vorbestimmten Parallaxe zwischen den Bildern eines nämlichen Subjekts erhalten werden, wobei die Vorrichtung zur Bilddateiverarbeitung umfasst:
Stereobilddatenerzeugungsmittel (50b) zum Erzeugen der Stereobilddaten, welche die mehreren monokularen Bilder angeben, die mit der vorbestimmten Parallaxe zwischen den Bildern des nämlichen Subjekts erhalten werden;
Metadatenerzeugungsmittel (50a) zum Erzeugen von Metadaten bezüglich der Stereobilddaten;
Bildcharakteristikinformationserzeugungsmittel (70) zum Erzeugen bildcharakteristischer Information zur Darstellung von Charakteristiken eines Bilds, das auf Grundlage der Stereobilddaten angegeben wird, wobei die Bilddaten komprimiert sind und die bildcharakteristische Information eine DC-Komponenten als einen Mittelwert von Pixelwerten in einem bestimmten Block des durch die komprimierten Bilddaten angegebenen Bilds enthält; und
Bilddateierzeugungsmittel (50c) zum Synthetisieren der durch die Stereobilddateierzeugungsmittel (50b) erzeugten Stereobilddaten und der durch die Metadatenerzeugungsmittel (50a) erzeugten Metadaten zum Erzeugen einer Bilddatei, wobei die Bilddateierzeugungsmittel (50c) zu den durch die Metadatenerzeugungsmittel (50a) erzeugten Metadaten die durch die Bildcharakteristikinformationserzeugungsmittel (70) erzeugten bildcharakteristische Information hinzufügt.

2. Vorrichtung zur Bilddateiverarbeitung gemäß Anspruch 1, wobei der Mittelwert der Pixelwerte in der DC-Komponente des bestimmten Blocks eine Datenkompressionsverarbeitung in einem JPEG-komprimierten Bild betrifft.

3. Vorrichtung zur Bilddateiwiedergabe, die Stereobilddaten handhabt, welche mehrere monokulare Bilder angeben, die mit einer vorbestimmten Parallaxe zwischen den Bildern für ein nämliches Subjekt erhalten werden, wobei die Vorrichtung zur Bilddateiwiedergabe umfasst:
Wiedergabemittel (93, 98) zum Wiedergeben und Anzeigen eines Stereobilds auf Grundlage einer Stereobilddatei, die gebildet ist durch Synthetisieren der Stereobilddaten und Metadaten, welche bildcharakteristische Information enthalten zur Darstellung von Charakteristiken eines durch die Stereobilddaten angegebenen Bilds, wobei die Stereobilddaten komprimiert sind und die bildcharakteristische Information eine DC-Komponente als einen Mittelwert von Pixelwerten in einem bestimmten Block des durch die komprimierten Bilddaten angegebenen Bilds enthält; und
Beurteilungsmittel zum Ausführen einer vergleichenden Beurteilung zwischen bildcharakteristischer Information, die von Bilddaten einer in die Vorrichtung zur Bild Dateiwiedergabe eingegebenen Stereobilddatei entnommen ist, und bildcharakteristischer Information, die in Metadaten der in die Vorrichtung zur Bilddateiwiedergabe eingegebenen Stereobilddatei enthalten ist.

4. Vorrichtung zur Bilddateiwiedergabe gemäß Anspruch 3, ferner umfassend Hinweismittel (89) zur Ausgabe eines Hinweises, falls eine Abweichung durch die Beurteilungsmittel (94) beurteilt wird.

5. Vorrichtung zur Bilddateiwiedergabe gemäß Anspruch 3, ferner umfassend Steuermittel (88) zum Verhindern einer Fortführung eines Wiedergabebetriebs durch die Wiedergabemittel (93, 98), falls eine Abweichung durch die Beurteilungsmittel (94) beurteilt wird.

6. Vorrichtung zur Bilddateiwiedergabe gemäß Anspruch 5, ferner umfassend Hinweismittel (89) zur Ausgabe eines Hinweises, falls eine Abweichung durch die Abweichungsmittel (94) beurteilt wird.

7. Vorrichtung zur Bilddateiwiedergabe gemäß Anspruch 3, ferner umfassend Steuermittel (88) zum Ausführen eines Deaktivierungsprozesses zum Deaktivieren eines Teils der oder der gesamten in den Metadaten enthaltenen Information, falls eine Abweichung durch die Beurteilungsmittel (94) beurteilt wird.

8. Vorrichtung zur Bilddateiwiedergabe gemäß Anspruch 5, ferner umfassend Hinweismittel (89) zur Ausgabe eines Hinweises, falls eine Abweichung durch die Beurteilungsmittel (94) beurteilt wird.

9. Vorrichtung zur Bilddateiwiedergabe gemäß Anspruch 5, wobei, falls eine Abweichung durch die Beurteilungsmittel (94) beurteilt wird, ein Bildwiedergabebetrieb durch die Wiedergabemittel (93, 98) fortgesetzt wird durch Handhabung der Bilddaten als ein gewöhnliches ebenes Bild nach Ausführung eines Prozesses zum Deaktivieren eines Teils der oder der gesamten in den Metadaten enthaltenen Information.

10. Vorrichtung zum Bearbeiten/Editieren einer Bilddatei, die Stereobilddaten handhabt, welche mehrere monokulare Bilder angeben, die mit einer vorbestimmten Parallaxe zwischen den Bildern eines nämlichen Subjekts erhalten werden, wobei die Vorrichtung zum Bearbeiten/Editieren der Bilddatei umfasst:
Mittel (83) zum Bearbeiten/Editieren eines Bilds zum Ausführen eines Prozesses der Bearbeitung/Editierung eines Bilds für eine Stereobilddatei, die gebildet ist durch Synthetisieren der Stereobilddaten und Metadaten, welche bildcharakteristische Information enthalten zur Darstellung von Charakteristiken eines durch die Stereobilddaten als ein Ziel angegebenen Bilds, wobei die Bilddaten komprimiert sind und die bildcharakteristische Information eine DC-Komponente als einen Mittelwert von Pixelwerten in einem bestimmten Block des durch die komprimierten Bilddaten angegebenen Bilds enthält; und
Stereobilddateierzeugungsmittel zum Synthetisieren der Stereobilddaten, die durch die Mittel (83) zum Bearbeiten/Editieren eines Bilds bildbearbeitet bzw. editiert worden sind, und der Metadaten zum Erzeugen einer Stereobilddatei; wobei
die Stereobilddateierzeugungsmittel Bildcharakteristikinformationsaktualisierungsmittel (86) zum Aktualisieren der bildcharakteristischen Information in Übereinstimmung mit dem Inhalt des durch die Mittel zum Bearbeiten/Editieren eines Bilds ausgeführten Prozesses der Bearbeitung/Editierung aufweisen und zu den Metadaten die durch die Bildcharakteristikinformationsaktualisierungsmittel aktualisierte bildcharakteristische Information hinzufügen zum Erzeugen der Stereobilddatei.

11. Vorrichtung zur Bearbeitung/Editierung einer Bilddatei gemäß Anspruch 10, ferner umfassend Beurteilungsmittel (88) zum Entnehmen einer bildcharakteristischen Information, die Charakteristiken eines Bilds angeben, das auf Grundlage von Stereobilddaten einer eingegebenen Stereobilddatei angegeben ist, und zum Ausführen einer vergleichenden Beurteilung zwischen der bildcharakteristischen Information und einer in Metadaten der eingegebenen Stereobilddatei enthaltenen bildcharakteristischen Information.

12. Vorrichtung zum Bearbeiten/Editieren einer Bilddatei gemäß Anspruch 11, ferner umfassend Hinweismittel (89) zum Ausgeben eines Hinweises, falls eine Abweichung durch die Beurteilungsmittel (88) beurteilt wird.

13. Vorrichtung zur Bearbeitung/Editierung einer Bilddatei gemäß Anspruch 11, wobei ein Teil oder die Gesamtheit der in den Metadaten enthaltenen Information deaktiviert ist, falls eine Abweichung durch die Beurteilungsmittel (88) beurteilt wird.

14. Vorrichtung zur Bearbeitung/Editierung einer Bilddatei gemäß Anspruch 13, ferner umfassend Hinweismittel (89) zur Ausgabe eines Hinweises, falls eine Abweichung durch die Beurteilungsmittel (88) beurteilt wird.

15. Vorrichtung zur Bearbeitung/Editierung gemäß Anspruch 13, wobei der Prozess zur Bearbeitung/Editierung der Bilddatei durch die Mittel (83) zur Bearbeitung/Editierung des Bilds unterbleiben, falls eine Abweichung durch die Beurteilungsmittel (89) beurteilt wird.

## Revendications

1. Appareil de traitement de fichiers d'images qui gère des données d'images stéréo indiquant des images monoculaires multiples obtenues avec une parallaxe prédéterminée entre les images pour un même sujet, l'appareil de traitement de fichiers d'images comprenant :
un moyen (50b) de génération de données d'images stéréo pour générer les données d'images stéréo indiquant les images monoculaires multiples obtenues avec la parallaxe prédéterminée entre les images pour le même sujet ;
un moyen (50a) de génération de métadonnées pour générer des métadonnées relatives aux données d'images stéréo ;
un moyen (70) de génération d'informations de caractéristiques d'images pour générer des informations de caractéristiques d'images montrant des caractéristiques d'une image indiquées sur la base des données d'images stéréo, dans lequel les données d'images sont compressées et les informations de caractéristiques d'images incluent une composante continue comme une moyenne de valeurs de pixels dans un bloc particulier de l'image indiqué par les données d'images compressées ; et
un moyen (50c) de génération de fichiers d'images pour synthétiser les données d'images stéréo générées par le moyen (50b) de génération de données d'images stéréo et les métadonnées générées par le moyen (50a) de génération de métadonnées pour générer un fichier d'images, dans lequel le moyen (50c) de génération de fichiers d'images ajoute les informations de caractéristiques d'images générées par le moyen (70) de génération d'informations de caractéristiques d'images aux métadonnées générées par le moyen (50a) de génération de métadonnées.

2. Appareil de traitement de fichiers d'images selon la revendication 1, dans lequel la moyenne des valeurs de pixels dans la composante continue du bloc particulier se rapporte à un traitement de compression de données dans une image compressée JPEG.

3. Appareil de reproduction de fichiers d'images qui gère des données d'images stéréo indiquant des images monoculaires multiples obtenues avec une parallaxe prédéterminée entre les images pour un même sujet, l'appareil de reproduction de fichiers d'images comprenant :
un moyen (93, 98) de reproduction pour reproduire et afficher une image stéréo sur la base d'un fichier d'images stéréo configuré en synthétisant les données d'images stéréo et des métadonnées qui incluent des informations de caractéristiques d'images montrant des caractéristiques d'une image indiquée par les données d'images stéréo, dans lequel les données d'images sont compressées et les informations de caractéristiques d'images incluent une composante continue comme une moyenne de valeurs de pixels dans un bloc particulier de l'image indiqué par les données d'images compressées ; et
un moyen de jugement pour effectuer un jugement par comparaison entre des informations de caractéristiques d'images extraites de données d'images d'un fichier d'images stéréo entré dans l'appareil de reproduction de fichiers d'images et des informations de caractéristiques d'images incluses dans des métadonnées du fichier d'images stéréo entré dans l'appareil de reproduction de fichiers d'images.

4. Appareil de reproduction de fichiers d'images selon la revendication 3, comprenant en outre un moyen (89) d'avertissement pour émettre un avertissement dans un cas où un désaccord est jugé par le moyen (94) de jugement.

5. Appareil de reproduction de fichiers d'images selon la revendication 3, comprenant en outre un moyen (88) de commande pour interdire la poursuite d'une opération de reproduction par le moyen (93, 98) de reproduction dans un cas où un désaccord est jugé par le moyen (94) de jugement.

6. Appareil de reproduction de fichiers d'images selon la revendication 5, comprenant en outre un moyen (89) d'avertissement pour émettre un avertissement dans un cas où un désaccord est jugé par le moyen (94) de jugement.

7. Appareil de reproduction de fichiers d'images selon la revendication 3, comprenant en outre un moyen (88) de commande pour exécuter un traitement de désactivation pour désactiver une partie ou la totalité des informations incluses dans les métadonnées dans un cas où un désaccord est jugé par le moyen (94) de jugement.

8. Appareil de reproduction de fichiers d'images selon la revendication 5, comprenant en outre un moyen (89) d'avertissement pour émettre un avertissement dans un cas où un désaccord est jugé par le moyen (94) de jugement.

9. Appareil de reproduction de fichiers d'images selon la revendication 5, dans lequel, dans un cas où un désaccord est jugé par le moyen (94) de jugement, une opération de reproduction d'images par le moyen (93, 98) de reproduction est poursuivie en gérant les données d'images comme une image plane ordinaire après exécution du traitement de désactivation d'une partie ou de la totalité des informations incluses dans les métadonnées.

10. Appareil de modification/édition de fichiers d'images qui gère des données d'images stéréo indiquant des images monoculaires multiples obtenues avec une parallaxe prédéterminée entre les images pour un même sujet, l'appareil de modification/édition de fichiers d'images comprenant :
un moyen (83) de modification/édition d'images pour exécuter un traitement de modification/édition d'images pour un fichier d'images stéréo configuré en synthétisant les données d'images stéréo et des métadonnées qui incluent des informations de caractéristiques d'images montrant des caractéristiques d'une image indiquée par les données d'images stéréo comme une cible, dans lequel les données d'images sont compressées et les informations de caractéristiques d'images incluent une composante continue comme une moyenne de valeurs de pixels dans un bloc particulier de l'image indiqué par les données d'images compressées ; et
un moyen de génération de fichiers d'images stéréo pour synthétiser les données d'images stéréo qui ont été traitées par modification/édition d'images par le moyen (83) de modification/édition d'images et les métadonnées pour générer un fichier d'images stéréo ; dans lequel
le moyen de génération de fichiers d'images stéréo a un moyen (86) de mise à jour d'informations de caractéristiques d'images pour mettre à jour les informations de caractéristiques d'images conformément au contenu du traitement de modification/édition exécuté par le moyen de modification/édition d'images, et ajoute les informations de caractéristiques d'images mises à jour par le moyen de mise à jour d'informations de caractéristiques d'images aux métadonnées pour générer le fichier d'images stéréo.

11. Appareil de modification/édition de fichiers d'images selon la revendication 10, comprenant en outre un moyen (88) de jugement pour extraire des informations de caractéristiques d'images indiquant des caractéristiques d'une image indiquée sur la base de données d'images stéréo d'un fichier d'images stéréo entré et effectuer un jugement par comparaison entre les informations de caractéristiques d'images et des informations de caractéristiques d'images incluses dans des métadonnées du fichier d'images stéréo entré.

12. Appareil de modification/édition de fichiers d'images selon la revendication 11, comprenant en outre un moyen (89) d'avertissement pour émettre un avertissement dans un cas où un désaccord est jugé par le moyen (88) de jugement.

13. Appareil de modification/édition de fichiers d'images selon la revendication 11, dans lequel une partie ou la totalité des informations incluses dans les métadonnées sont désactivées dans un cas où un désaccord est jugé par le moyen (88) de jugement.

14. Appareil de modification/édition de fichiers d'images selon la revendication 13, comprenant en outre un moyen (89) d'avertissement pour émettre un avertissement dans un cas où un désaccord est jugé par le moyen (88) de jugement.

15. Appareil de modification/édition de fichiers d'images selon la revendication 13, dans lequel le traitement de modification/édition des données d'images par le moyen (83) de modification/édition d'images est interdit dans un cas où un désaccord est jugé par le moyen (89) de jugement.
